# EUROPÄISCHE PATENTSCHRIFT

(11) **EP 0 993 651 B1**
(45) Veröffentlichungstag und Bekanntmachung des Hinweises auf die Patenterteilung: **08.01.2003**
(21) Anmeldenummer: 98939536.3
(22) Anmeldetag: 26.06.1998
(51) Int. Cl.: G06K 9/32

(54) **MESSMARKE UND VERFAHREN ZUR ERKENNUNG VON MESSMARKEN SOWIE VERFAHREN ZUR OBJEKTVERMESSUNG**
REFERENCE MARK, METHOD FOR RECOGNIZING REFERENCE MARKS AND METHOD FOR OBJECT MEASURING
MARQUE DE REPERE, PROCEDE DE RECONNAISSANCE DE MARQUES DE REPERE ET PROCEDE DE MESURE D'OBJETS

(30) Priorität: 04.07.1997 DE 19728513
(43) Veröffentlichungstag der Anmeldung: 19.04.2000
(73) Patentinhaber: DaimlerChrysler AG, 70567 Stuttgart (DE)
(72) Erfinder: CAESAR, Torsten, D-78315 Radolfzell (DE); MICHAELIS, Martin, D-89077 Ulm (DE)
(86) Internationale Anmeldenummer: EP9803910
(87) Internationale Veröffentlichungsnummer: WO99001841

(56) Entgegenhaltungen:
- EP-A- 0 416 742
- EP-A- 0 440 129
- EP-A- 0 751 474
- US-A- 3 885 229
- MAGGIONI C ET AL: "IM HANDUMDREHEN" FUNKSCHAU, Bd. 66, Nr. 3, 21. Januar 1994, Seiten 82-87, XP000425242
- FRY J: "PARTS TRACKING STARTS WITH CHARACTER RECOGNITION" I & CS - INDUSTRIAL AND PROCESS CONTROL MAGAZINE, Bd. 63, Nr. 5, 1. Mai 1990, Seite 101/102 XP000128741
- Y. FUJIMOTO ET AL.: "Recognition of Handprinted Characters by Nonlinear Elastic Matching" ITN. CONF. ON PATTERN RECOGNITION, 8. November 1976, Seiten 113-118, XP002085416 Coronado, ca, usa
- Research Disclosure No. 34918, "Registration Marks for Machine Vision", XP000377191, May 1993, No. 349, Emsworth, GB

## Beschreibung

Die Erfindung betrifft ein Verfahren zur Erkennung von Meßmarken gemäß Oberbegriff des Patentanspruchs 1 sowie ein Verfahren zur Objektvermessung gemäß Oberbegriff des Patentanspruchs 12 sowie eine Meßmarke gemäß Oberbegriff des Patentanspruchs 13. Solche Meßmarken und Verfahren sind bereits aus [1] bekannt.

Meßmarken und Verfahren dieser Art dienen beispielsweise dazu, die Durchlaufzeiten von Meßaufgaben in der Industrie zu verkürzen. Hierbei gewannen in letzter Zeit vor allem optische Meßverfahren wie die Photogrammetrie und die Streifenprojektion zunehmend an Bedeutung. Wesentliche Anforderungen an derartige Verfahren sind eine robuste Auslegung der Meßprozesse und eine weitgehende Automatisierung. So ist oft eine schnelle, lückenlose 3D-Vermessung großer Objekte, die anschließend als CAD-Datensätze bereitgestellt werden müssen, gefordert. Auf dem Prinzip der Streifenprojektion basierende optische Meßsysteme liefern hierfür lückenlos und flächendeckend 3D-Daten des Meßobjektes. Das in der Regel begrenzte Meßvolumen dieser Systeme erfordert wichtige Zusatzinformationen, wie Verknüpfungspunkte in einem übergeordneten Koordinatensystem, die ein paßgerechtes Zusammenfügen vieler Meßaufnahmen ermöglichen. Die hierfür notwendige Information, wie die 3D-Koordinaten von Paßpunkten, liefert die Photogrammetrie. In Bezug auf die Automatisierbarkeit des photogrammetrischen Meß- und Auswerteprozesses kommt der Bildmessung eine besondere Bedeutung zu. Mit wachsender Anzahl der zu messenden Bildpunkte bzw. der Anzahl Bilder eines Gesamtverbandes steigt der Aufwand zur Identifikation homologer Bildpunkte drastisch an. Um den Zeitaufwand diesbezüglich möglichst gering zu halten, werden in der Praxis zunehmend Meßmarken verwendet, die neben dem zu messenden, meist kreisförmigen Meß-Merkmal auch Kodier-Merkmale aufweisen. Diese in unterschiedlicher Form auftretenden Kodier-Merkmale sollen entweder nur der besseren visuellen Übersicht im Zuge einer vom Anwender interaktiv durchzuführenden Bildmessung ('Anklicken' homologer Bildpunkte) oder einer automatischen Erkennung von Meßmarken dienen. In der Praxis treten häufig Probleme bei der Erkennung der Meßmarken durch geometrische Störeinflüsse, wie beispielsweise Rotation und/oder Verzerrungen der Meßmarke auf. Um derartige Störeinflüsse rechnerisch kompensieren zu können, ist es vorteilhaft, die Meßmarken mit zusätzlichen Orientierungs-Merkmalen zu versehen.

Die Flexibilität und Robustheit einer automatischen Meßmarkenerkennung wird insbesondere durch die Eigenschaften der verwendeten Kodierung bestimmt. So ist der Wertebereich (Kodiertiefe) der in der Praxis weitverbreiteten Ringkodierung eingeschränkt, da nur eine begrenzte Anzahl von Kodiersegmenten aufgelöst werden kann. Eine Erweiterung des Wertebereichs ist verhältnismäßig umständlich und würde unweigerlich eine erhebliche Vergrößerung der Meßmarke nach sich ziehen. Ein weiterer Einflußfaktor auf die automatische Meßmarkenerkennung stellt die Qualität der abgebildeten Kodierung dar. Wesentliche Einflußfaktoren hierfür sind geometrische Störungen, beispielsweise hervorgerufen durch Rotation, Maßstabsveränderung, Scherung, Stauchung oder perspektivische Verzerrung der Meßmarke, oder radiometrische Störungen wie Bildrauschen, Reflektionen, Kontrastarmut, lokale Kontrastunterschiede und Abbildungsunschärfen oder auch teilweise Verdeckungen der Meßmarke. Eine Kompensation derartiger Störfaktoren verbessert eine automatische Meßmarkenerkennung wesentlich.

Fehlerkennungen einer Meßmarke haben auf nachfolgende Auswerteprozesse, beispielsweise auf eine Objektvermessung, einen wesentlich größeren Fehlereinfluß als zurückgewiesene und deshalb nicht berücksichtigte Meßmarken [2]. Derartige Fehlerkennungen können stark reduziert werden, durch die Bestimmung einer Erkennungsgüte, die es dem Anwender ermöglicht, Schwellwerte für die Rückweisung der Meßmarke zu setzen.

Die Aufgabe der vorliegenden Erfindung besteht daher darin, zum einen ein Verfahren anzugeben, mit dem Meßmarken möglichst schnell und sicher erkannt werden können und welches möglichst robust und flexibel ist, beziehungsweise zum anderen darin, ein Verfahren zur Vermessung von Objekten anzugeben, welches das zu schaffende Verfahren zur Erkennung von Meßmarken möglichst effektiv nutzt sowie zum dritten darin, eine Meßmarke anzugeben, die von dem zu schaffenden Verfahren zur Erkennung von Meßmarken besonders schnell und gut erkannt wird.

Der nächstliegende Stand der Technik dazu wird durch Research Disclosure 34918, "Registration Marks for Machine Vision", May 1993, Emsworth, GB, gebildet. Dieses Dokument zeigt eine Meßmarke, welche Meß-Merkmale (die drei kreisförmigen Punkte an den Ecken), Orientierungs-Merkmale (die mit den Meß-Merkmalen in Verbindung stehenden Liniensegmente) und Kodier-Merkmale (Beschriftung des Labels) enthält. Bei der durch dieses Dokument beschriebenen Meßmarke stehen die Meß- und die Orientierungs- Merkmale miteinander in Verbindung; die skizzenhafte Darstellung der Meßmarke läßt erkennen, daß die teilweise sichtbare Trennung nur zufällig im Rahmen der Handskizze erfolgte und nicht auf technischen Überlegungen beruht (würde die Trennung als wesentlich erachtet, so wäre bei der Erstellung der Skizze mit Sicherheit darauf geachtet worden, daß keine Verbindung zwischen Meß- und Orientierungs-Merkmalen aufgetreten wäre).

Die Erfindung ist in Bezug auf das zu schaffende Verfahren zur Auswertung von Bildern mit Meßmarken durch die Merkmale des Patentanspruchs 1 wiedergegeben und in Bezug auf das zu schaffende Verfahren zur Objektvermessung durch die Merkmale des Patentanspruchs 12 sowie in Bezug auf die zu schaffende Meßmarke durch die Merkmale des Patentanspruchs 13. Die weiteren Ansprüche enthalten vorteilhafte Ausgestaltungen und Weiterbildungen des erfindungsgemäßen Verfahrens zur Erkennung von Meßmarken (Patentansprüche 2 bis 11) sowie der erfindungsgemäßen Meßmarke (Patentanspruch 14).

Der Kern der Erfindung besteht bezüglich des Verfahrens zur Erkennung von Meßmarken darin, daß in einem mittels elektromagnetischer Wellen aus dem optischen oder einem angrenzenden Wellenlängenbereich erzeugten, aus Pixeln aufgebauten, digitalen Abbild einer potentiellen Meßmarke mit bekannten Pixel-Koordinaten des Zentrums, potentiell enthaltend Meß-, Orientierungs- und Kodier-Merkmale, geometrische und radiometrische Störeinflüsse und Störeinflüsse durch partielle Verdekkungen der Meßmarke automatisch kompensiert werden, und daß mindestens ein Gütemaß für die Erkennung der Meßmarke bestimmt wird, und daß mindestens eine Überprüfung auf Erkennung einer tatsächlichen Meßmarke oder auf Rückweisung einer vermeintlichen Meßmarke anhand des mindestens einen Gütemaßes durchgeführt wird, und daß aus den Kodier-Merkmalen einer tatsächlichen Meßmarke ein charakteristischer Merkmalsvektor abgeleitet wird, der einer Klassifikation zugeführt wird.

In einer ersten vorteilhaften Ausgestaltung des erfindungsgemäßen Verfahrens zur Erkennung von Meßmarken, im folgenden bezeichnet als Meßmarkenerkennungsverfahren (MEV), wird das digitale Abbild der vermeintlichen oder tatsächlichen Meßmarke zunächst lokal binarisiert, und erst danach erfolgen eine Kompensationen von Störeinflüssen, eine Überprüfung von mindestens einem Rückweisungskriterium und die Ableitung des Merkmalsvektors einer tatsächlichen Meßmarke. Die Binarisierung wird zur Kompensation radiometrischer Störungen, insbesondere zur Kontraststeigerung durchgeführt. Der Vorteil einer lokalen Binarisierung, das heißt im Nahbereich der potentiellen Meßmarke, gegenüber einer globalen Binarisierung, das heißt über ein Gesamtbild mit mehreren Meßmarken, liegt in einer meist wesentlich besseren Kompensation radiometrischer Störungen, insbesondere einer höheren Kontraststeigerung.

In einer zweiten vorteilhaften Ausgestaltung des erfindungsgemäßen MEV werden Zusammenhangsgebiete innerhalb des digitalen Abbildes der vermeintlichen oder tatsächlichen Meßmarke identifiziert und es wird anhand dieser Zusammenhangsgebiete entschieden, ob es sich bei dem untersuchten Objekt um eine vermeintliche oder um eine tatsächliche Meßmarke handelt, und bei einer Zuordnung dieser Zusammenhangsgebiete zu einer Störung, also beispielsweise einer vermeintlichen Meßmarke in Form einer Reflexion, erfolgt eine Rückweisung, und bei einer Zuordnung der Zusammenhangsgebiete zu einer tatsächlichen Meßmarke, erfolgt eine eindeutige Zuordnung für die einzelnen Zusammenhangsgebiet, derart, daß bekannt ist, welches einzelne Zusammenhangsgebiet Träger von Meß-Merkmalen und/oder Orientierungs-Merkmalen und/oder Kodier-Merkmalen ist. Der Vorteil dieser Ausgestaltung liegt einerseits darin, daß man sich mit der Beschränkung des zu untersuchenden Bildinhaltes auf die Zusammenhangsgebiete auf die wesentlichen Informationsträger beschränkt und damit das Verfahren beschleunigt und zum anderen darin, daß die Zuordnung der verschiedenen Zusammenhangsgebiete zu bestimmten Merkmalsarten es ermöglicht, für die Extraktion einer bestimmten Information, beispielsweise der Orientierung der Meßmarke, nur bestimmte Zusammenhangsgebiete zu untersuchen, nämlich die, die Orientierungs-Merkmale enthalten, und so ebenfalls das Verfahren beschleunigt.

Die Identifizierung der Zusammenhangsgebiete kann vorteilhaft auf verschiedene Arten erfolgen. Zum einen kann eine Zusammenhangsanalyse von Farbwert-Objekten des digitalen Abbildes der vermeintlichen oder tatsächlichen Meßmarke erfolgen, bei der alle Pixel des digitalen Abbildes, deren Farbwert innerhalb eines vorgegebenen Wertebereiches liegt, einem Farbwert-Objekt zugeordnet werden. Zum anderen kann eine Zusammenhangsanalyse von Grauwert-Objekten des digitalen Abbildes der vermeintlichen oder tatsächlichen Meßmarke erfolgen, bei der alle Pixel des digitalen Abbildes, deren Grauwert innerhalb eines vorgegebenen Wertebereiches liegt, einem Grauwert-Objekt zugeordnet werden. Zum dritten kann eine Zusammenhangsanalyse von Weißobjekten des binarisierten digitalen Abbildes der vermeintlichen oder tatsächlichen Meßmarke erfolgen. Jede der drei Ausgestaltungs-Möglichkeiten des erfindungsgemäßen MEV birgt spezielle Vorteile. Die Untersuchung von Farbwerten ermöglicht eine genauere ldentifizierung von Zusammenhangsgebieten als die von Grauwerten, insbesondere wenn sich die Zusammenhangsgebiete in ihren Farben und ihren Helligkeiten deutlich von ihrer Umgebung unterscheiden. Die Untersuchung von Grauwerten, erfordert weniger Rechenzeit und eine einfachere und damit kostengünstigere Aufnahmevorrichtung zur Erstellung des digitalen Abbildes der Meßmarke. Die Untersuchung von Weißobjekten eines digitalisierten Abbildes erfordert am wenigsten Rechenzeit und ist deshalb am schnellsten.

In einer weiteren vorteilhaften Ausgestaltung des erfindungsgemäßen MEV liegen die Meß-Merkmale, Orientierungs-Merkmale und Kodier-Merkmale der Meßmarken in bekannter, fester Anzahl vor, und sie besitzen relativ zueinander bekannte, feste geometrische Relationen, insbesondere bekannte, feste Abstände und relative Positionen zueinander und sie stehen in einem bekannten, festen Größenverhältnis zueinander. Die Entscheidung anhand der Zusammenhangsgebiete, ob es sich bei dem untersuchten Objekt um eine vermeintliche oder um eine tatsächliche Meßmarke handelt, wird dann getroffen, indem überprüft wird, ob die einzelnen gefundenen Zusammenhangsgebiete die vorgegebene Mindestanzahl aufweisen und innerhalb eines vorgegebenen, vorzugsweise frei vorgegebenen, Toleranzbereiches in der bekannten geometrischen Relation zueinander stehen. Eine derartige Gestaltung der Meßmarke ermöglicht das genannte Verfahren und so eine einfache, damit schnelle aber trotzdem zuverlässige Entscheidungsfindung, ob es sich bei dem untersuchten Objekt um eine vermeintliche oder um eine tatsächliche Meßmarke handelt.

In einer weiteren vorteilhaften Ausgestaltung des erfindungsgemäßen MEV wird eine vereinfachte Repräsentation der gefundenen Zusammenhangsgebiete erzeugt und durch diese Vereinfachung die weitere Auswertung beschleunigt. Besonders vorteilhaft ist eine weitgehende Vereinfachung des Zusammenhangsgebietes bei gleichzeitig minimalem Informationsverlust und möglichst geringem Rechenaufwand. Diese Anforderung wird hinreichend erfüllt von einer Konturrepräsentation des Zusammenhangsgebietes mittels Polygonen, einer sogenannten Polygonrepräsentation, und besser erfüllt von einer diese originäre Polygonrepräsentation ersetzenden, approximierten Polygonrepräsentation, einer sogenannten Polygonapproximation. Als besonders effektiv erweist sich für eine derartige Polygonapproximation ein Verfahren, bei dem ausschließlich Stützstellen des originären Polygons der Konturrepräsentation entfernt werden und zwar solange bis eine vorgegebene, maximal tolerierbare Flächenabweichung überschritten wird. Hierdurch können insbesondere Konturverfälschungen durch Abtast- und/oder Binarisierungseinflüsse kompensiert werden.

In einer weiteren vorteilhaften Ausgestaltung des erfindungsgemäßen MEV wird zunächst aus der Menge der gefunden Zusammenhangsgebiete einer tatsächlichen Meßmarke mittels der Kenntnis der geometrischen Relation der verschiedenen Zusammenhangsgebiete zueinander mindestens ein Zusammenhangsgebiet als Träger von Orientierungs-Merkmalen identifiziert, und aus diesen Orientierungs-Merkmalen wird dann die tatsächliche Orientierung der Meßmarke ermittelt, und dann wird eine Normierung auf eine fest vorgegebene, einheitliche Orientierung durchgeführt, insbesondere eine Normierung des digitalen Abbildes der Meßmarke oder der Zusammenhangsgebiete oder der Repräsentationen der Zusammenhangsgebiete. Der Vorteil dieser Ausgestaltung besteht darin, daß durch die Beschränkung der Untersuchung auf die Zusammenhangsgebiete, die der vorgegebenen geometrischen Relation entsprechen und die demnach Orientierungs-Merkmale enthalten, die Bestimmung der tatsächlichen Orientierung der Meßmarke zum einen mit weniger Rechenaufwand und damit schneller erfolgt und zum anderen mit einem geringeren Fehler, da die Berücksichtigung von Störungen bei der Berechnung so weitgehend ausgeschlossen wird. Entsprechend wird auch die Normierung auf eine vorgegebene, einheitliche Orientierung aller zu verarbeitender Meßmarken qualitativ hochwertiger. Die Normierung selbst ist notwendig, um geometrische Störungen bei der Erkennung der Meßmarken zu kompensieren.

In einem weiteren Schritt dieser vorteilhaften Ausgestaltung des erfindungsgemäßen MEV wird aus der Menge der gefunden Zusammenhangsgebiete mittels der Kenntnis der geometrischen Relation der verschiedenen Zusammenhangsgebiete zueinander mindestens ein Zusammenhangsgebiet als Träger von Kodier-Merkmalen identifiziert, und dann wird jedes Zusammenhangsgebiet, das als Träger von Kodier-Merkmalen identifiziert wurde, größennormiert auf ein n-mal-n-Raster, beispielsweise auf ein 16-mal-16-Raster. Der Vorteil dieser Ausgestaltung besteht auch hier darin, daß durch die Beschränkung der Untersuchung auf die Zusammenhangsgebiete, die der vorgegebenen geometrischen Relation entsprechen und die demnach Kodier-Merkmale enthalten, die Bestimmung der tatsächlichen Kodierung der Meßmarke zum einen mit weniger Rechenaufwand und damit schneller erfolgt und zum anderen mit einem geringeren Fehler, da die Berücksichtigung von Störungen bei der Berechnung so weitgehend ausgeschlossen wird. Die Normierung der Zusammenhangsgebiete auf ein quadratisches Raster kompensiert Störungen durch unterschiedliche Größen der Zusammenhangsgebiete verschiedener Meßmarken, die beispielsweise durch unterschiedliche Aufnahmeentfernungen hervorgerufen wurden, und stellt mit jedem Rasterelement einen leicht und damit schnell identifizierbaren Merkmalsträger zur Verfügung.

In einem weiteren besonders vorteilhaften Zwischenschritt dieser vorteilhaften Ausgestaltung des erfindungsgemäßen MEV werden die einzelnen Rasterelemente jedes Zusammenhangsgebietes, das als Träger von Kodier-Merkmalen identifiziert und größennormiert wurde, über einen maximalen Farbwert-Bereich oder Grauwert-Bereich skaliert, beispielsweise über einen Grauwertbereich von 0 bis 255. Der Vorteil dieser Ausgestaltung besteht in einer Kompensation radiometrischer Störungen, insbesondere in einer Kontrastverstärkung. Die Merkmale der einzelnen Merkmals-Träger, nämlich der Rasterelemente, werden stärker verdeutlicht und damit wird eine nachfolgende Klassifikation erleichtert.

In einem weiteren Schritt dieser vorteilhaften Ausgestaltung des erfindungsgemäßen MEV wird jeder Farb- oder Grauwert eines Rasterelementes eines Zusammenhangs gebietes, das als Träger von Kodier-Merkmalen identifiziert wurde, als Komponente eines n-mal-n-dimensionalen, beispielsweise 256-dimensionalen, Merkmalsvektors dieses Zusammenhangsgebietes aufgefaßt, und dann wird dieser Merkmalsvektor einer Hauptachsentransformation unterzogen, derart, daß die einzelnen Komponenten des transformierten Merkmalsvektors entsprechend ihrer Wichtigkeit für eine Klassifikation in geordneter Reihenfolge vorliegen. Danach wird eine begrenzte Anzahl von Komponenten des transformierten Merkmalsvektors, gezählt ab der ersten und damit wichtigsten Komponente, beispielsweise die ersten 40 Komponenten, einer Einzel-Objekt-Klassifikation zugeführt, hier beispielsweise einer einstufigen quadratischen Polynom-Klassifikation. Der Vorteil dieser Ausgestaltung besteht darin, daß die Klassifikation auf die wesentlichen Informationsträger, also hier die ersten Komponenten des Merkmalsvektors beschränkt werden kann und damit beschleunigt werden kann.

In einem weiteren Schritt dieser vorteilhaften Ausgestaltung des erfindungsgemäßen MEV wird mittels dieser Klassifikation ein Wahrscheinlichkeits-Vektor berechnet, dessen Komponentenanzahl gleich der Anzahl der möglichen Kodier-Objekte ist, und dessen Komponenten die Wahrscheinlichkeit der Identifizierung einer bestimmten Objektklasse angeben. Danach wird eine Objektklasse identifiziert, derart, daß die Objektklasse als die richtige vermutet wird, deren Identifizierung mit der höchsten Wahrscheinlichkeit erfolgte, sofern diese Wahrscheinlichkeit einen vorgegebenen Minimalwert überschreitet. Anderenfalls, das heißt, wenn keine Objektklasse mit einer Wahrscheinlichkeit über der der vorgegebenen Minimal-Wahrscheinlichkeit identifiziert wurde, erfolgt eine Zurückweisung der Meßmarke. Der Vorteil dieser Ausgestaltung besteht einerseits darin, daß durch die Berücksichtigung aller einzelnen wichtigen Komponenten des Merkmalsvektors als Informationsträger für die Wahrscheinlichkeitsberechnung einer korrekten Identifizierung einer Objektklasse teilweise Verdeckungen der Meßmarke kompensiert werden können. Andererseits können durch diese Ausgestaltung Objekte beziehungsweise Meßmarken, die dennoch nicht eindeutig beziehungsweise nicht mit ausreichend hoher Wahrscheinlichkeit identifiziert wurden, zurückgewiesen werden und dies ist für eine nachfolgende Weiterverarbeitung der Meßdaten wesentlich günstiger als eine Fehlzuordnung.

In einer weiteren vorteilhaften Ausgestaltung des erfindungsgemäßen MEV weisen diezu erkennenden Meßmarken voneinander unabhängige, räumlich getrennte Meß-Merkmale, Orientierungs-Merkmale und Kodier-Merkmale auf. Der Vorteil dieser Ausgestaltung besteht darin, daß durch diese eindeutige Trennung, insbesondere von Orientierungs-Merkmalen und Kodier-Merkmalen, einerseits die Erkennung wesentlich robuster wird und andererseits wesentlich mehr Freiheitsgrade der Kodierung zur Verfügung stehen und so die Kodiertiefe erhöht werden kann.

In einer weiteren vorteilhaften Ausgestaltung des erfindungsgemäßen MEV weisen die zu erkennenden Meßmarken Meß-Merkmale, Orientierungs-Merkmale in mindestens zwei Vorzugsrichtungen, besonders vorteilhaft in zwei zueinander senkrecht stehenden Vorzugsrichtungen, und Kodier-Merkmale in Form einer festen Anzahl bekannter Zeichen und/oder Symbole auf, wobei die Meß-Merkmale, Orientierungs-Merkmale und Kodier-Merkmale in bekannter, fester Anzahl vorliegen und wobei die Meß-Merkmale, Orientierungs-Merkmale und Kodier-Merkmale relativ zueinander bekannte, feste geometrische Relationen besitzen, insbesondere bekannte, feste Abstände und relative Positionen zueinander besitzen und in einem bekannten, festen Größenverhältnis zueinander stehen. Der Vorteil dieser Ausgestaltung besteht darin, daß sich aus den Differenzen der Vorzugsrichtungen der Meßmerkmale der bekannten realen Meßmarke und der vorliegenden Abbildung der Meßmarke die Orientierung der Meßmarke und damit ihr Rotations- und Scherwinkel relativ zu einer normierten Orientierung leicht berechnen läßt. Der Vorteil der festen Anzahl und festen geometrischen Relation besteht in der leichteren Zuordbarkeit der einzelnen Zusammenhangsgebiete als informationsträger der Meß-Merkmale, Orientierungs-Merkmale und Kodier-Merkmale. Des weiteren erlaubt die feste Anzahl und feste geometrische Relation eine zusätzliche einfache Überprüfung, ob es sich bei dem untersuchten Objekt um eine tatsächliche Meßmarke handelt, beziehungsweise wie hoch die Erkennungsgüte ist.

In einer weiteren vorteilhaften Ausgestaltung des erfindungsgemäßen MEV sind die Meß-Merkmale ausgebildet in Form einer Kreisfläche, die Orientierungs-Merkmale sind ausgebildet in einer U-förmigen Gestalt, bestehend aus zwei Seitenteilen und einem senkrecht zu diesen stehenden, deutlich längeren Verbindungssteg und die Kodier-Merkmale sind ausgebildet in Form von drei nacheinanderstehenden Ziffern eines serifenlosen Fonts oder von vier nacheinanderstehenden Zeichen aus der Menge der 10 Ziffern und der 26 Großbuchstaben eines serifenlosen Fonts. Dabei sind die Meß-Merkmale, Orientierungs-Merkmale und Kodier-Merkmale relativ zueinander angeordnet in einer bekannten, festen, geometrischen Relationen derart, daß sich die Meß-Merkmale in Form einer Kreisfläche zentral innerhalb der U-förmigen Gestalt der Orientierungs-Merkmale befinden und die Kodier-Merkmale in Form einer festen Anzahl bekannter Zeichen unter dem Verbindungssteg des Us in einem bekannten, festen Abstand und in einem bekannten, festen Größenverhältnis zu diesem nacheinander angeordnet sind. Der Vorteil dieser Ausgestaltung besteht darin, daß zum einen das U-förmige Orientierungs-Merkmal durch seine Gestalt und geometrische Relation zu den anderen Merkmalen besonders leicht identifiziert werden kann und daß durch die senkrechte Ausrichtung der Seiten- und Verbindungsstege die beiden Vorzugsrichtungen der Meßmarke besonders leicht identifiziert werden können, und daß beide Richtungen auf Grund der deutlich größeren Länge des Verbindungssteges besonders leicht unterschieden werden können. Der Vorteil der Kodierung durch Zeichen, also hier Ziffern und Großbuchstaben, besteht in deren strikter Trennung von den Orientierungs-Merkmalen, in ihrer im Vergleich zum Beispiel zu den üblichen Ring-Kodierungen deutlich besseren Detektierbarkeit und in der wesentlich leichteren Erweiterbarkeit der Kodiertiefe.

In einer weiteren vorteilhaften Ausgestaltung des erfindungsgemäßen MEV findet die Entscheidung, ob es sich bei dem untersuchten Objekt um eine vermeintliche oder tatsächliche Meßmarke handelt, und die Zuordnung der einzelnen Zusammenhangsgebiete zu Meß-, Orientierungs- oder Kodier-Merkmalen derart statt, daß zunächst in der Umgebung der bekannten Pixel-Koordinaten des Zentrums einer vermeintlichen oder tatsächlichen Meßmarke nach Zusammenhangsgebieten gesucht wird, und daß für jedes gefundene Zusammenhangsgebiet einer vermeintlichen oder tatsächlichen Meßmarke, ein Rechteck bestimmt wird, welches das kleinste, achsenparallele, umschließende Rechteck des jeweiligen Zusammenhangsgebietes ist. Danach wird das kleinste Zusammenhangsgebiet, innerhalb dessen umschließenden Rechteckes sich bekannten Pixel-Koordinaten des Zentrums der vermeintlichen oder tatsächlichen Meßmarke befinden, als ein potentieller Träger von Meß-Merkmalen identifiziert und das nächstgrößere Zusammenhangsgebiet, innerhalb dessen umschließenden Rechteckes sich die bekannten Pixel-Koordinaten des Zentrums der vermeintlichen oder tatsächlichen Meßmarke befinden, wird als ein potentieller Träger von Orientierungs-Merkmale identifiziert. Danach wird anhand der umschließenden Rechtecke die Entscheidung getroffen wird, ob es sich bei dem untersuchten Objekt um eine vermeintliche oder tatsächliche Meßmarke handelt, indem überprüft wird, ob die beiden Rechtecke innerhalb eines vorgegebenen Toleranzbereiches in bekannter geometrischer Relation zueinander stehen, hier beispielsweise derart, daß beide in einem bekannten Größenverhältnis zueinander stehen und eins vom anderen umschlossen wird. Eine Zurückweisung der Meßmarke erfolgt, wenn dieser Toleranzbereich überschritten wird. Der Vorteil dieser Ausgestaltung besteht darin, daß so mit sehr einfachen und somit schnellen Mitteln entschieden werden kann, ob es sich bei dem untersuchten Objekt um eine vermeintliche oder tatsächliche Meßmarke handelt, und gleichzeitig die Zuordnung der einzelnen Zusammenhangsgebiete zu Meß-, Orientierungs- oder Kodier-Merkmalen erfolgen kann. Die eigentliche Extraktion der Information kann dann ausschließlich an den bekannten, jeweils wesentlichen Informationsträgern und damit schneller erfolgen.

In einem weiteren Schritt dieser vorteilhaften Ausgestaltung des erfindungsgemäßen MEV wird die Orientierung der Meßmarke, im Falle der Erkennung des untersuchten Objektes als tatsächliche Meßmarke, bestimmt. Dies erfolgt beispielsweise derart, daß eine Polygonapproximation der Orientierungsmerkmale erzeugt wird, und daß die Winkel der Orientierungs-Merkmale relativ zu den Hauptachsen des Pixel-Koordinatensystems bestimmt werden durch die Auftragung der einzelnen mit ihrer Länge gewichteten Polygonabschnitte der Polygonapproximation in einem Winkelhistogramm und durch die Ermittlung der beiden höchsten Amplituden dieses Winkelhistogramms, und der Zuordnung der höchsten Amplitude zum Verbindungssteg des Us, und der Zuordnung der zweithöchsten Amplitude zu den Seitenstegen des Us. In einer anderen vorteilhaften Variante der Erfindung erfolgt die Bestimmung der Orientierung der Meßmarke derart, daß ebenfalls eine Polygonapproximation der Orientierungsmerkmale erzeugt wird, daß die Winkel der Orientierungs-Merkmale relativ zu den Hauptachsen des Pixel-Koordinatensystems bestimmt werden, indem zum einen der längste Polygonabschnitt dem Verbindungssteg des Us zugeordnet wird und auch alle anderen Polygonabschnitte innerhalb eines vorgegebenen Winkel-Toleranzbereiches dem Verbindungssteg des Us zugeordnet werden und nach deren Summation die Berechnung des gewichteten Mittels der Winkel dieser Polygonabschnitte erfolgt, und zum anderen der längste Polygonabschnitt, der nicht dem Verbindungssteg des Us zugeordnet wurde, den Seitenstegen des Us zugeordnet wird und auch alle anderen Polygonabschnitte innerhalb eines vorgegebenen Winkel-Toleranzbereiches den Seitenstegen des Us zugeordnet werden und nach deren Summation die Berechnung des gewichteten Mittels der Winkel dieser Polygonabschnitte erfolgt. In beiden Varianten erfolgt dann aus der Kenntnis des Winkels des Verbindungssteges des Us relativ zu den Hauptachsen des Pixel-Koordinatensystems die Berechnung des Rotationswinkels der Meßmarke und aus der Kenntnis des Winkels der Seitenstege des Us relativ zu den Hauptachsen des Pixel-Koordinatensystems die Berechnung des Scherwinkels der Meßmarke. Dabei wird die Rotation der Meßmarke berücksichtigt und der berechnete vermeintliche Scherwinkel entsprechend korrigiert. Der Vorteil dieser Ausgestaltung liegt in der hohen Geschwindigkeit ihrer Durchführung.

In einem weiteren Schritt dieser vorteilhaften Ausgestaltung des erfindungsgemäßen MEV werden in Kenntnis von Rotations- und Scherwinkel der Meßmarke eine Rotationsund eine Schernormierung des Abbildes der Meßmarke durchgeführt und in dem rotations- und schernormierten Abbild werden einzelne Zusammenhangsgebiete als Träger von Kodier-Merkmalen identifiziert, derart, daß überprüft wird, ob sie sich in der bekannten Anzahl unter dem Verbindungssteg des Us befinden, und ob ihre Größenunterschiede innerhalb eines vorgegebenen Toleranzbereiches liegen. Bei Nichterfüllung dieser ldentifikations-Anforderungen erfolgt eine Zurückweisung der Meßmarke. Der Vorteil dieser Ausgestaltung besteht darin, daß so mit sehr einfachen und somit schnellen Mitteln entschieden werden kann, ob es sich bei dem untersuchten Objekt mit hinreichend hoher Wahrscheinlichkeit um eine Meßmarke handelt und ob deren Erkennung mit hinreichend hoher Erkennungsgüte durchführbar ist.

Die grundlegende Idee des erfindungsgemäßen Verfahrens zur Vermessung von Objekten besteht darin, daß mittels elektromagnetischer Wellen aus dem optischen oder einem angrenzenden Wellenlängenbereich ein aus Pixeln aufgebautes, digitales Abbild erzeugt wird von dem zu vermessenden, mit Meßmarken, enthaltend Meß-Merkmale, Orientierungs-Merkmale und Kodier-Merkmale, versehenen Objekt, und daß innerhalb des digitalen Abbildes des Objektes potentielle, also vermeintliche oder tatsächliche, Meßmarken identifiziert werden, beispielsweise helle Flächen, deren Größe innerhalb eines bestimmten Toleranzbereiches liegt, und daß die Pixel-Koordinaten der Zentren dieser potentiellen Meßmarken bestimmt werden, und daß die Erkennung der Meßmarken lokal innerhalb der Umgebung der Pixel-Koordinaten der Zentren dieser potentiellen Meßmarken durchgeführt wird unter Verwendung von einer oder mehreren der vorher beschriebenen Ausgestaltungen des erfindungsgemäßen Verfahrens zur Erkennung von Meßmarken und daß die Pixel-Koordinaten der einzelnen erkannten Meßmarken in Bezug gesetzt werden zu einem 3D-Koordinatensystem des zu vermessenden Objektes, beispielsweise in Bezug gesetzt werden mittels einer 3-D-Korrespondenzanalyse, z.B. mittels Photogrammetrie.

Der Kern der Erfindung besteht bezüglich der Meßmarke darin, daß sie voneinander unabhängige, räumlich getrennte Meß-Merkmale, Orientierungs-Merkmale und Kodier-Merkmale aufweist, derart, daß die Orlentlerungs-Merkmale mindestens zwei zueinander senkrecht stehende Vorzugsrichtungen aufweisen, und daß die Kodier-Merkmale in Form einer festen Anzahl bekannter Zeichen und/oder Symbole vorliegen, und daß die Meß-Merkmale, Orientierungs-Merkmale und Kodier-Merkmale in bekannter, fester Anzahl vorliegen, und daß die Meß-Merkmale, Orientierungs-Merkmale und Kodier-Merkmale relativ zueinander bekannte, feste geometrische Relationen besitzen, insbesondere bekannte, feste Abstände und relative Positionen zueinander besitzen, und in einem bekannten, festen Größenverhältnis zueinander stehen.

In einer besonders vorteilhaften Ausgestaltung der Meßmarke weist diese Meß-Merkmale auf, die ausgebildet sind in Form einer Kreisfläche, und Orientierungs-Merkmale, die ausgebildet sind in einer U-förmigen Gestalt, bestehend aus zwei Seitenteilen und einem senkrecht zu diesen stehenden, vorzugsweise deutlich längeren Verbindungssteg, und Kodier-Merkmale, die ausgebildet sind in Form von entweder drei nacheinanderstehenden Ziffern eines serifenlosen Fonts oder vier nacheinanderstehenden Zeichen aus der Menge der 10 Ziffern und der 26 Großbuchstaben eines serifenlosen Fonts. Des weiteren sind die Meß-Merkmale, Orientierungs-Merkmale und Kodier-Merkmale relativ zueinander in einer bekannten, festen geometrischen Relationen derart angeordnet, daß sich die Meß-Merkmale in Form einer Kreisfläche zentral innerhalb der U-förmigen Gestalt der Orientierungsmerkmale befinden, und daß die Kodier-Merkmale in Form einer festen Anzahl bekannter Zeichen unter dem Verbindungssteg des Us in einem bekannten, festen Abstand und in einem bekannten festen Größenverhältnis zu diesem nacheinander angeordnet sind.

Im folgenden wird eine beispielhafte Ausführung des erfindungsgemäßen Verfahrens zur Vermessung von Objekten und eine beispielhafte Ausführung des erfindungsgemäßen Verfahrens zur Erkennung von Meßmarken näher erläutert.

Ein zu vermessendes Objekt wird mit Meßmarken versehen.

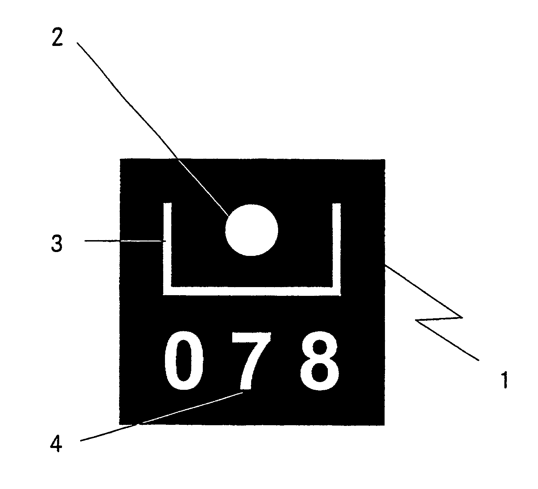

Eine solche Meßmarke 1 ist (vergrößert) in Figur 1 dargestellt. Sie enthält Meß-Merkmale 2, in Form einer Kreisfläche, Orientierungs-Merkmale 3, in Form eines Us, in dessen Zentrum sich die Meß-Merkmale befinden und dessen Verbindungssteg deutlich länger ist als die Seitenstege, und Kodier-Merkmale 4, in Form von drei Ziffern einheitlicher Größe, die sich in einem festen Abstand unter dem Verbindungssteg des Us befinden.

Das mit Meßmarken versehene Objekt wird mit einer optischen Digital-Kamera aus verschiedenen Positionen als Grauwertbild aufgenommen. Mittels 3-D-Korrespondenzanalyse werden die 3-D-Koordinaten des Objektes in Bezug gesetzt zu den Pixel-Koordinaten eines Abbildes des Objektes.

Innerhalb eines Gesamtbildes werden potentielle Meßmarken ermittelt. Dabei kann es sich um tatsächliche Meßmarken oder um vermeintliche Meßmarken handeln, beispielsweise um Reflexionen oder andere helle Störungen. Für diese potentiellen Meßmarken werden die Pixel-Koordinaten ihrer Zentren bestimmt. Nachfolgend wird ein Verfahren zur Erkennung von Meßmarken durchgeführt.

In einer nachfolgend detailliert beschriebenen, beispielhaften Ausführung des erfindungsgemäßen Verfahrens zur Erkennung von Meßmarken wird zunächst die Umgebung der bekannten Pixel-Koordinaten des Zentrums einer potentiellen Meßmarke binarisiert. Hierzu wird ausgehend von den bekannten Pixel-Koordinaten zunächst das Meß-Merkmal, also die Kreisfläche bestimmt. Die Kreisfläche einer tatsächlichen Meßmarke ist weiß, sie besitzt also einen hohen Grauwert, der in der hier benutzten Skala in der Nähe von 255 liegen muß. Ausgehend von den bekannten Pixel-Koordinaten wird der Durchmesser der Kreisfläche in horizontaler und vertikaler Richtung vermessen und das Ergebnis gemittelt, wobei als Grenze der Kreisfläche ein Abfall des Grauwertes des gerade betrachteten Pixels gegenüber dem Grauwert des zentralen Pixels um 50 Prozent angesehen wird. Als Umgebung wird nun eine Fläche mit 10-fachen Durchmesser des Meßkreises und gleichen Zentrum betrachtet. Innerhalb dieser Umgebung werden die Grauwerte aller Pixel gemittelt und mit diesem Mittelwert als Schwellwert wird eine Binarisierung der Umgebung durchgeführt.

Die Mittelung der Grauwerte zur Bestimmung des Schwellwertes der Binarisierung erfolgt folgendermaßen: Zunächst werden innerhalb der Umgebung der Pixel-koordinaten des Zentrums der vermeintlichen oder tatsächlichen Meßmarke der maximale und der minimale Grauwert der Pixel bestimmt. Danach wird jeder Pixel innerhalb dieser Umgebung, dessen Grauwert näher an dem maximalen Grauwert aller Pixel innerhalb dieser Umgebung liegt als an dem minimalen Grauwert aller Pixel innerhalb dieser Umgebung liegt, einer Gruppe von Pixeln mit hohen Grauwerten zugeordnet. Pixel deren Grauwert genau zwischen dem maximalen und minimalen Grauwert liegt, werden ebenfalls dieser Gruppe zugeordnet. Jeder Pixel innerhalb dieser Umgebung, dessen Grauwert näher an dem minimalen Grauwert aller Pixel innerhalb dieser Umgebung liegt als an dem maximalen Grauwert aller Pixel innerhalb dieser Umgebung liegt, wird einer Gruppe von Pixeln mit niedrigen Grauwerten zugeordnet. Danach wird der Mittelwert aller Grauwerte aller Pixel aus der Gruppe von Pixeln mit hohen Grauwerten gebildet und mit der Anzahl der Gruppenelemente gewichtet und es wird der Mittelwert aller Grauwerte aller Pixel aus der Gruppe von Pixeln mit niedrigen Grauwerten gebildet wird und mit der Anzahl der Gruppenelemente gewichtet. Danach wird aus diesen beiden gewichteten Mittelwerten ein Mittelwert gebildet, der als Schwellwert der Binarisierung genutzt wird.

Bei der eigentlichen Binarisierung erhält jeder Pixel innerhalb dieser Umgebung, dessen Grauwert über dem Schwellwert liegt oder gleich dem Schwellwert ist, den Binär-Wert Weiß, und jeder Pixel innerhalb dieser Umgebung, dessen Farb- oder Grauwert unter dem Schwellwert liegt, erhält den Binär-Wert Schwarz.

Innerhalb dieser binarisierten Umgebung werden nun Zusammenhangsgebiete gesucht, derart, daß alle aneinandergrenzenden Pixel, die nach der Binarisierung weiß oder schwarz sind, einem jeweiligen Zusammenhangsgebiet zugeordnet werden.

Die Entscheidung, ob sich in der untersuchten Umgebung der bekannten Pixel-Koordinaten eine tatsächliche Meßmarke befindet, und gegebenenfalls die Zuordnung der einzelnen gefundenen Zusammenhangsgebiete zu bestimmten Merkmals-Arten erfolgt folgendermaßen: Zunächst wird für jedes gefundene Zusammenhangsgebietes einer vermeintlichen oder tatsächlichen Meßmarke, ein Rechteck bestimmt, welches das kleinste, achsenparallele, umschließende Rechteck des jeweiligen Zusammenhangsgebietes ist. Dann wird das kleinste Zusammenhangsgebiet, innerhalb dessen umschließenden Rechteckes sich die bekannten Pixel-Koordinaten des Zentrums der vermeintlichen oder tatsächlichen Meßmarke befinden, als das Zusammenhangsgebiet angesehen, das die Meß-Merkmale enthält, und das nächstgrößere Zusammenhangsgebiet, innerhalb dessen umschließenden Rechteckes sich die bekannten Pixel-Koordinaten des Zentrums der vermeintlichen oder tatsächlichen Meßmarke befinden, wird als das Zusammenhangsgebiet angesehen, das die Orientierungs-Merkmale enthält. Danach wird überprüft, ob folgende Bedingung erfüllt ist. Innerhalb eines vorgegebenen Toleranzbereiches stehen die beiden Rechtecke in bekannter geometrischer Relation zueinander, das heißt insbesondere, sie stehen in einem bekannten Größenverhältnis zueinander und das eine wird vom anderen umschlossen. Ist diese Bedingung nicht erfüllt, wird das untersuchte Objekt als vermeintliche Meßmarke zurückgewiesen.

Ist das untersuchte Objekt als tatsächliche Meßmarke erkannt worden, so wird deren Orientierung wie folgt ermittelt:

Zunächst wird eine vereinfachte Repräsentation der gefundenen Zusammenhangsgebiete erzeugt, hier speziell eine Konturrepräsentation mittels Polygonen, eine Polygonrepräsentation. Dann wird diese originäre Polygonrepräsentation durch eine approximierte Polygonrepräsentation, eine Polygonapproximation, ersetzt wird. Diese Polygonapproximation wird derart durchgeführt, daß sie ausschließlich Stützstellen des originären Polygons der Konturrepräsentation entfernt und zwar solange bis eine vorgegebene maximal tolerierbare Flächenabweichung überschritten wird.

Von den so bestimmten Polygonabschnitten wird der längste dem Verbindungssteg des Us zugeordnet sowie jeder weitere Polygonabschnitt, der sich relativ zu dem ersten innerhalb eines vorgegebenen Winkeltoleranzbereiches befindet. Von den so gefundenen Polygonabschnitten wird das gewichtete Mittel ihrer Winkel relativ zu den Hauptachsen des Pixel-Koordinatensystems berechnet. Von den noch nicht berücksichtigten Polygonabschnitten wird der längste den Seitenstegen des Us zugeordnet sowie jeder weitere Polygonabschnitt, der sich relativ zu dem ersten innerhalb eines vorgegebenen Winkeltoleranzbereiches befindet. Von den so gefundenen Polygonabschnitten wird das gewichtete Mittel ihrer Winkel relativ zu den Hauptachsen des Pixel-Koordinatensystems berechnet.

Aus der Kenntnis des Winkels des Verbindungssteges des Us relativ zu den Hauptachsen des Pixel-Koordinatensystems wird der Rotationswinkel der Meßmarke berechnet und eine Rotationsnormierung des Abbildes der Meßmarke durchgeführt. Aus der Kenntnis des Winkels der Seitenstege des Us relativ zu den Hauptachsen des Pixel-Koordinatensystems wird der vermeintliche Scherwinkel der Meßmarke berechnet und aus diesem vermeintlichen Scherwinkel wird mittels Kenntnis des Rotationswinkels der tatsächliche Scherwinkel berechnet und eine Schernormierung des Abbildes der Meßmarke durchgeführt.

In dem rotations- und schernormierten Abbild der Meßmarke werden die Zusammenhangsgebiete , die Kodier-Merkmale enthalten, wie folgt identifiziert:

Es wird überprüft, ob sich unter dem Verbindungssteg des Us eine bekannte feste Anzahl von Zusammenhangsgebieten befindet und ob deren Größenunterschiede innerhalb eines vorgegebenen Toleranzbereiches liegen. Bei Nichterfüllung dieser Identifikations-Anforderungen erfolgt eine Zurückweisung der Meßmarke.

Bei Erfüllung dieser Identifikations-Anforderungen erfolgt die Dekodierung der Kodier-Merkmale wie folgt:

Jedes Zusammenhangsgebiet, das als Träger von Kodier-Merkmalen identifiziert wurde, wird größennormiert wird auf ein 16-mal-16-Raster und wird kontrastverstärkt durch eine Skalierung der Grauwerte der einzelnen Rasterelemente des Zusammenhangsgebietes über einen Grauwertbereich von 0 bis 255. Jeder Grauwert dieses 16-mal-16-Rasters wird als Komponente eines 256-dimensionalen Merkmalsvektors dieses Zusammenhangsgebietes aufgefaßt und der so gebildete Merkmalsvektor wird einer Hauptachsentransformation unterzogen, derart, daß die einzelnen Komponenten des transformierten Merkmalsvektors entsprechend ihrer Wichtigkeit für eine Klassifikation in geordneter Reihenfolge vorliegen. Die ersten, also wichtigsten 40 Komponenten dieses Merkmalsvektors werden einer Einzel-Zeichen-Klassifikation zugeführt, hier speziell einer einstufigen quadratischen Polynom-Klassifikation.

Mittels dieser Klassifikation wird ein Wahrscheinlichkeits-Vektor berechnet, dessen Komponentenanzahl gleich der Anzahl der möglichen Zeichen ist, also hier gleich der Anzahl aller Ziffern, also gleich 10 ist, und dessen Komponenten die Wahrscheinlichkeit der Identifizierung einer bestimmten Zeichenklasse angeben. Dann wird die Zeichenklasse als die richtige vermutet, deren Identifizierung mit der höchsten Wahrscheinlichkeit erfolgte, sofern diese Wahrscheinlichkeit einen vorgegebenen, Minimalwert überschreitet. Wird diese minimale Wahrscheinlichkeit für eine korrekte Dekodierung nicht erreicht, erfolgt eine Zurückweisung der Meßmarke.

Nach einer erfolgreichen Erkennung der Meßmarke, also einer erfolgreichen Identifizierung als tatsächliche Marke und erfolgreicher Dekodierung der Kodier-Merkmale, werden als Ergebnis, die Meßpunkt-Koordinaten mit den zugehörigen dekodierten Kodier-Merkmalen an das Verfahren zur Vermessung von Objekten weitergegeben. Optional kann ein Gütemaß der Erkennung, beispielsweise der geringste der jeweiligen Wahrscheinlichkeitswerte der korrekten Erkennung der drei Ziffern, übergeben werden.

Auf dem Wege der 3-D-Korrespondenzanalyse, hier speziell mittels Photogrammetrie, werden aus den Pixel-Koordinaten der Meßmarken die realen 3-D-Koordinaten des zu vermessenden Objektes bestimmt. Dabei kann das Gütemaß der Erkennung berücksichtigt werden und eine entsprechende Gewichtung der einzelnen Meßmarken erfolgen.

Das erfindungsgemäße Verfahren zur Objektvermessung erweist sich in der Ausführungsform dieses Beispiels als besonders geeignet für Vermessung großer Objekte, beispielsweise von Kraftfahrzeugen.

Die Erfindung ist nicht nur auf das zuvor geschilderte Ausführungsbeispiel beschränkt, sondern vielmehr auf weitere übertragbar.

So ist zum Beispiel denkbar, daß das zu vermessende Objekt nicht mit Meßmarken in materieller Form versehen wird, sondern daß Licht durch entsprechend geformte Masken auf die Objektoberfläche projiziert wird oder entsprechend geformte Meßmarken direkt mittels eines Laserstrahls auf der Objektoberfläche abgebildet werden. Eine derartige, rein optische Methode zum Versehen der Objektoberfläche mit Meßmarken würde auch die Vermessung von Objekten mit extrem empfindlicher Oberfläche oder sehr schwer zugänglicher Oberfläche erlauben, ja sogar die Vermessung von Flüssigkeitsoberflächen.

### Literatur

[1] Ahn, S.J. (1997)
   "Kreisförmige Zielmarke"; 4. ABW-Workshop, TA Esslingen, 22./23.01.1997
[2] Goding, R. (1997)
   "Neue Aufnahme- und Auswertetechniken in der RolleiMetric Close Range Workstation (CDW)"
   Firmenprospekt der Firma Rollei Fototechnik, 1997

## Patentansprüche

1. Verfahren zur Auswertung von Bildern mit Meßmarken zur Vermessung von Objekten mittels Bildmessung,
- die Meß-Merkmale, Orientlerungs-Merkmale und Kodier-Merkmale enthalten,
- bei dem zunächst ein aus Pixeln bestehendes, digitales Abbild einer vermeintlichen oder tatsächlichen Meßmarke erzeugt wird mittels elektromagnetischer Wellen aus dem optischen oder einem angrenzenden Wellenlängenbereich,
- wobei die Pixel-Koordinaten des Zentrums der vermeintlichen oder tatsächlichen Meßmarke innerhalb ihres digitalen Abbildes bekannt sind, und
- bei dem unter Zuhilfenahme der Orientierungs-Merkmale geometrische Störeinflüsse hinsichtlich der Erkennbarkeit der Meßmarke automatisch kompensiert werden,
**dadurch gekennzeichnet,**
- **daß** radiometrische Störeinflüsse durch lokale Binarisierung automatisch kompensiert werden, und
- **daß** Störeinflüsse durch partielle Verdeckungen automatisch kompensiert werden, indem die Rasterelemente des die Kodier-Merkmale der Meßmarke enthaltenden Zusammenhangsgebiets einer Klassifikation unterzogen werden, wobei die durch die Klassifikation gelieferte höchste Wahrscheinlichkeiten mit einer vorgegebenen Minimal-Wahrscheinlichkeit verglichen wird, und wobei bei Überschreiten dieser Minimal-Wahrscheinlichkeit die Meßmarke der dem wahrscheinlichsten Kodier-Merkmal entsprechenden Objektklasse zugeordnet wird,
- und **daß** mindestens ein Gütemaß für die Erkennung der Meßmarke bestimmt wird,
- und **daß** mindestens eine Überprüfung auf Erkennung einer tatsächlichen Meßmarke oder auf Rückweisung einer vermeintlichen Meßmarke anhand des mindestens einen Gütemaßes durchgeführt wird,
- und **daß** aus den Kodier-Merkmalen einer tatsächlichen Meßmarke ein charakteristischer Merkmalsvektor abgeleitet wird, der einer Klassifikation zugeführt wird, und
- **daß** die zu erkennenden Meßmarken voneinander räumlich getrennte Meß-Merkmale, Orientierungs-Merkmale und Kodier-Merkmale aufweisen.

2. Verfahren nach Anspruch 1,
**dadurch gekennzeichnet,**
- **daß** das digitale Abbild der vermeintlichen oder tatsächlichen Meßmarke zunächst lokal binarisiert wird, und
- **daß** erst nach dieser Binarisierung eine Kompensationen von Störeinflüssen, eine Überprüfung von mindestens einem Rückweisungskriterium und die Ableitung des Merkmalsvektors einer tatsächlichen Meßmarke erfolgen.

3. Verfahren nach Anspruch 2,
**dadurch gekennzeichnet,**
**daß** derart lokal binarisiert wird,
- **daß** innerhalb einer vorgegebenen Umgebung der Pixel-Koordinaten des Zentrums der vermeintlichen oder tatsächlichen Meßmarke der maximale und der minimale Farb- oder Grauwert der Pixel bestimmt wird, und
- **daß** jeder Pixel innerhalb dieser Umgebung, dessen Farb- oder Grauwert näher an dem maximalen Farb- oder Grauwert aller Pixel innerhalb dieser Umgebung liegt als an dem minimalen Farb- oder Grauwert aller Pixel innerhalb dieser Umgebung liegt, oder dessen Farb- oder Grauwert genau in der Mitte dieser beiden Werte liegt, einer Gruppe von Pixeln mit hohen Farb- oder Grauwerten zugeordnet wird, und
- **daß** jeder Pixel innerhalb dieser Umgebung, dessen Farb- oder Grauwert näher an dem minimalen Farb- oder Grauwert aller Pixel innerhalb dieser Umgebung liegt als an dem maximalen Farb- oder Grauwert aller Pixel innerhalb dieser Umgebung liegt, einer Gruppe von Pixeln mit niedrigen Farb- oder Grauwerten zugeordnet wird, und
- **daß** der Mittelwert aller Farb- oder Grauwerte aller Pixel aus der Gruppe von Pixeln mit hohen Färb- oder Grauwerten gebildet wird und mit der Anzahl der Gruppenelemente gewichtet wird, und
- **daß** der Mittelwert aller Farb- oder Grauwerte aller Pixel aus der Gruppe von Pixeln mit niedrigen Farb- oder Grauwerten gebildet wird und mit der Anzahl der Gruppeneiemente gewichtet wird, und
- **daß** aus diesen beiden gewichteten Mittelwerten ein Mittelwert gebildet wird, der als Schwellwert der Binarisierung genutzt wird, und
- **daß** jeder Pixel innerhalb dieser Umgebung, dessen Farb- oder Graswert über dem Schwellwert liegt oder gleich dem Schwellwert ist, den Binär-Wert Weiß erhält, und
- **daß** jeder Pixel innerhalb dieser Umgebung, dessen Farb- oder Grauwert unter dem Schwellwert liegt, den Binär-Wert Schwarz erhält.

4. Verfahren nach einem der Ansprüche 1,2 oder 3,
**dadurch gekennzeichnet,**
- **daß** die Meß-Merkmale, Orientierungs-Merkmale und Kodier-Merkmale der Meßmarke in bekannter, fester Anzahl vorliegen, und
- **daß** die Meß-Merkmale, Orientierungs-Merkmale und Kodier-Merkmale relativ zueinander bekannte, feste geometrische Relationen besitzen, insbesondere bekannte, feste Abstände und relative Positionen zueinander besitzen und in einem bekannten, festen Größenverhältnis zueinander stehen, und
- **daß** Zusammenhangsgebiete innerhalb des digitalen Abbildes der vermeintlichen oder tatsächlichen Meßmarke identifiziert werden, und
- **daß** anhand dieser Zusammenhangsgebiete entschieden wird, ob es sich bei dem untersuchten Objekt um eine vermeintliche oder um eine tatsächliche Meßmarke handelt, und
- **daß** die Entscheidung anhand der Zusammenhangsgebiete, ob es sich bei dem untersuchten Objekt um eine vermeintliche oder tatsächliche Meßmarke handelt, getroffen wird, indem überprüft wird, ob die einzelnen gefundenen Zusammenhangsgebiete die vorgegebene Mindestanzahl aufweisen und innerhalb eines vorgegebenen, vorzugsweise frei vorgegebenen, Toleranzbereiches in der bekannten geometrischen Relation zueinander stehen, und
- **daß** bei einer Zuordnung der Zusammenhangsgebiete zu einer Störung, also einer vermeintlichen Meßmarke, eine Rückweisung erfolgt, und
- **daß** bei einer Zuordnung der Zusammenhangsgebiete zu einer tatsächlichen Meßmarke, eine eindeutige Zuordnung für jedes einzelne Zusammenhangsgebiet getroffen wird, derart, daß bekannt ist, welches einzelne Zusammenhangsgebiet Träger von Meß-Merkmalen und/oder Orientierungs-Merkmalen und/oder Kodier-Merkmalen ist.

5. Verfahren nach Anspruch 4,
**dadurch gekennzeichnet,**
**daß** die Identifizierung der Zusammenhangsgebiete derart erfolgt,
- **daß** eine Zusammenhangsanalyse von Farbwert-Objekten des digitalen Abbildes der vermeintlichen oder tatsächlichen Meßmarke erfolgt, bei der alle Pixel des digitalen Abbildes, deren Farbwert innerhalb eines vorgegebenen Wertebereiches liegt, einem Farbwert-Objekt zugeordnet werden,
oder
- **daß** eine Zusammenhangsanalyse von Grauwert-Objekten des digitalen Abbildes der vermeintlichen oder tatsächlichen Meßmarke erfolgt, bei der alle Pixel des digitalen Abbildes, deren Grauwert innerhalb eines vorgegebenen Wertebereiches liegt, einem Grauwert-Objekt zugeordnet werden,
oder
- **daß** eine Zusammenhangsanalyse von Schwarz- und/oder Weißobjekten des binarisierten digitalen Abbildes der vermeintlichen oder tatsächlichen Meßmarke erfolgt.

6. Verfahren nach Anspruch 4,
**dadurch gekennzeichnet,**
**daß** die Identifizierung der Zusammenhangsgebiete derart erfolgt,
- **daß** eine Zusammenhangsanalyse von Farbwert-Objekten des digitalen Abbildes der vermeintlichen oder tatsächlichen Meßmarke erfolgt, bei der alle Pixel des digitalen Abbildes mittels einer Klassifikation des Farbwertes, vorzugsweise unter Berücksichtigung der Farbwerte in einer lokalen Nachbarschaft, einem Farbwert-Objekt zugeordnet werden,
oder
- **daß** eine Zusammenhangsanalyse von Grauwert-Objekten des digitalen Abbildes der vermeintlichen oder tatsächlichen Meßmarke erfolgt, bei der alle Pixel des digitalen Abbildes mittels einer Klassifikation des Grauwertes, vorzugsweise unter Berücksichtigung der Grauwerte in einer lokalen Nachbarschaft, einem Grauwert-Objektzugeordnet werden,
oder
- **daß** eine Zusammenhangsanalyse von Schwarz- und/oder Weißobjekten des binarisierten digitalen Abbildes der vermeintlichen oder tatsächlichen Meßmarke erfolgt.

7. Verfahren nach einem der Ansprüche 3 bis 6, **dadurch gekennzeichnet,**
- **daß** eine vereinfachte Repräsentation der gefundenen Zusammenhangsgebiete erzeugt wird durch eine Konturrepräsentation mittels Polygonen, eine Polygonrepräsentation,
- und **dass** diese originäre Polygonrepräsentation durch eine approximierte Polygonrepräsentation, eine Polygonapproximation, ersetzt wird,
- und **daß** diese Polygonapproximation durchgeführt wird, derart, daß sie ausschließlich Stützstellen des originären Polygons der Konturrepräsentation entfernt, und zwar solange bis eine vorgegebene, vorzugsweise frei vorgegebene, maximal tolerierbare Flächenabweichung überschritten wird.

8. Verfahren nach einem der Ansprüche 4 bis 7,
**dadurch gekennzeichnet,**
- **daß** aus der Menge der gefunden Zusammenhangsgebiete einer tatsächlichen Meßmarke mittels der Kenntnis der geometrischen Relation der verschiedenen Zusammenhangsgebiete zueinander mindestens ein Zusammenhangsgebiet als Träger von Orientierungs-Merkmalen identifiziert wird, und
- **daß** aus diesen Orientierungs-Merkmalen die tatsächliche Orientierung der Meßmarke ermittelt wird, und
- **daß** eine Normierung auf eine fest vorgegebene, einheitliche Orientierung durchgeführt wird,
insbesondere eine Normierung des digitalen Abbildes der Meßmarke oder der Zusammenhangsgebiete, vorzugsweise eine Normierung der Repräsentation der Zusammenhangsgebiete, und
- **daß** aus der Menge der gefunden Zusammenhangsgebiete mittels der Kenntnis der geometrischen Relation der verschiedenen Zusammenhangsgebiete zueinander mindestens ein Zusammenhangsgebiet als Träger von Kodier-Merkmalen identifiziert wird, und
- **daß** jedes Zusammenhangsgebiet, das als Träger von Kodier-Merkmalen identifiziert wurde, größennormiert wird auf ein n-mal-n-Raster, vorzugsweise auf ein 16-mal-16-Raster, und
- **daß** vorzugsweise jedes Zusammenhangsgebiet, das als Träger von Kodier-Merkmalen identifiziert wurde, kontrastverstärkt wird durch eine Skalierung der Farb- oder Grau-Werte der einzelnen Rasterelemente des Zusammenhangsgebietes über einen maximalen Farbwert-Bereich oder Grauwert-Bereich, vorzugsweise über einen Grauwertbereich von 0 bis 255, und
- **daß** jeder Farb- oder Grauwert eines Rasterelementes eines Zusammenhangsgebietes, das als Träger von Kodier-Merkmalen identifiziert wurde, als Komponente eines n-mal-n - dimensionalen, vorzugsweise 256-dimensionalen, Merkmalsvektors dieses Zusammenhangsgebietes genutzt wird, und
- **daß** dieser Merkmalsvektor einer Hauptachsentransformation unterzogen wird, derart, daß die einzelnen Komponenten des transformierten Merkmalsvektors entsprechend ihrer Wichtigkeit für eine Klassifikation in geordneter Reihenfolge vorliegen, und
- **daß** eine begrenzte Anzahl von Komponenten des transformierten Merkmalsvektors, gezählt ab der ersten und damit wichtigsten Komponente, vorzugsweise die ersten 40 Komponenten, einer Einzel-Objekt-Klassifikation zugeführt werden, vorzugsweise einer Einzel-Zeichen- oder Einzel-Symbol-Klassifikation, vorzugsweise einer einstufigen quadratischen Polynom-Klassifikation zugeführt werden, und
- **daß** mittels dieser Klassifikation ein Wahrscheinlichkeits-Vektor berechnet wird, dessen Komponentenanzahl gleich der Anzahl der möglichen Kodier-Objekte ist, vorzugsweise gleich der Anzahl der möglichen Kodier-Zeichen oder Kodier-Symbole ist, und dessen Komponenten die Wahrscheinlichkeit der Identifizierung einer bestimmten Objektklasse angeben, vorzugsweise die Wahrscheinlichkeit der Identifizierung einer bestimmten Zeichen- oder Symbolklasse, und
- **daß** die Objektklasse, vorzugsweise Zeichen- oder Symbolklasse, als die richtige vermutet wird, deren Identifizierung mit der höchsten Wahrscheinlichkeit erfolgte, sofern diese Wahrscheinlichkeit einen vorgegebenen, vorzugsweise frei vorgegebenen, Minimalwert überschreitet, und
- **daß** eine Zurückweisung der Meßmarke erfolgt, wenn keine Objektklasse, vorzugsweise keine Zeichen- oder Symbolklasse, mit einer Wahrscheinlichkeit über der der vorgegebenen Minimal-Wahrscheinlichkeit identifiziert wurde.

9. Verfahren nach einem der Ansprüche 1 bis 8,
**dadurch gekennzeichnet,**
- **daß** die zu auszuwertenden Meßmarken aufweisen
- Meß-Merkmale,
- Orientierungs-Merkmale in mindestens zwei Vorzugsrichtungen, vorzugsweise in zueinander senkrecht stehenden Vorzugsrichtungen,
- Kodier-Merkmale in Form einer festen Anzahl bekannter Zeichen und/oder Symbole,
und
- **daß** die Meß-Merkmale, Orlentierungs-Merkmale und Kodier-Merkmale in bekannter, fester Anzahl vorliegen,
und
- **daß** die Meß-Merkmale, Orientierungs-Merkmale und Kodier-Merkmale relativ zueinander bekannte, feste geometrische Relationen besitzen,
insbesondere bekannte, feste Abstände und relative Positionen zueinander besitzen, und in einem bekannten, festen Größenverhältnis zueinander stehen.

10. Verfahren nach einem der Ansprüche 1 bis 9,
**dadurch gekennzeichnet,**
- **daß** die Meß-Merkmale ausgebildet sind in Form einer Kreisfläche,
- **daß** die Orientierungs-Merkmale ausgebildet sind in einer U-förmigen Gestalt, bestehend aus zwei Seitenteilen und einem senkrecht zu diesen stehenden, vorzugsweise deutlich längeren Verbindungssteg,
- **daß** die Kodier-Merkmale ausgebildet sind in Form von
- drei nacheinanderstehenden Ziffern eines serifenlosen Fonts oder
- vier nacheinanderstehenden Zeichen aus der Menge der 10 Ziffern und der 26 Großbuchstaben eines serifenlosen Fonts,
und
- **daß** die Meß-Merkmale, Orientierungs-Merkmale und Kodier-Merkmale relativ zueinander in einer bekannten, festen geometrischen Relationen derart angeordnet sind,
- **daß** sich die Meß-Merkmale in Form einer Kreisfläche zentral innerhalb der U-förmigen Gestalt der Orientierungsmerkmale befinden und
- **daß** die Kodier-Merkmale in Form einer festen Anzahl bekannter Zeichen unter dem Verbindungssteg des Us in einem bekannten, festen Abstand und in einem bekannten festen Größenverhältnis zu diesem nacheinander angeordnet sind.

11. Verfahren nach Anspruch 10,
**dadurch gekennzeichnet,**
- **daß** in der Umgebung der bekannten Pixel-Koordinaten des Zentrums einer vermeintlichen oder tatsächlichen Meßmarke nach Zusammenhangsgebieten gesucht wird, und
- **daß** für jedes gefundene Zusammenhangsgebietes einer vermeintlichen oder tatsächlichen Meßmarke, ein Rechteck bestimmt wird, welches das kleinste, achsenparallele, umschließende Rechteck des jeweiligen Zusammenhangsgebietes ist,
und
- **daß** das kleinste Zusammenhangsgebiet, innerhalb dessen umschließenden Rechteckes sich die bekannten Pixel-Koordinaten des Zentrums der vermeintlichen oder tatsächlichen Meßmarke befinden, als das Zusammenhangsgebiet identifiziert wird, das die Meß-Merkmale enthält, und
- **daß** das nächstgrößere Zusammenhangsgebiet, innerhalb dessen umschließenden Rechteckes sich die bekannten Pixel-Koordinaten des Zentrums der vermeintlichen oder tatsächlichen Meßmarke befinden, als das Zusammenhangsgebiet identifiziert wird, das die Orientierungs-Merkmale enthält,
und
- **daß** anhand der umschließenden Rechtecke die Entscheidung getroffen wird, ob es sich bei dem untersuchten Objekt um eine vermeintliche oder tatsächliche Meßmarke handelt,
indem überprüft wird, ob die beiden Rechtecke innerhalb eines vorgegebenen, vorzugsweise frei vorgegebenen, Toleranzbereiches in bekannter geometrischer Relation zueinander stehen, vorzugsweise in einem bekannten Größenverhältnis zueinander stehen und/oder das eine vom anderen umschlossen wird,
und
- **daß** eine Zurückweisung der Meßmarke erfolgt, wenn dieser Toleranzbereich überschritten wird,
und
- **daß**, im Falle der Erkennung des untersuchten Objektes als tatsächliche Meßmarke, die Bestimmung von deren Orientierung erfolgt, derart,
- **daß** eine Polygonapproximation der Orientierungsmerkmale erzeugt wird, und
- **daß** die Winkel der Orientierungs-Merkmale relativ zu den Hauptachsen des Pixel-Koordinatensystems bestimmt werden durch
- die Auftragung der einzelnen mit ihrer Länge gewichten Polygonabschnitte der Polygonapproximation in einem Winkelhistogramm und durch
- die Ermittlung der beiden höchsten Amplituden dieses Winkelhistogramms, und
- der Zuordnung der höchsten Amplitude zum Verbindungssteg des Us, und
- der Zuordnung der zweithöchsten Amplitude zu den Seitenstegen des Us,
oder
- **daß** die Winkel der Orientierungs-Merkmale relativ zu den Hauptachsen des Pixel-Koordinatensystems vorzugsweise bestimmt werden durch
- die Zuordnung des längsten Polygonabschnittes zum Verbindungssteg des Us, und durch
- die Zuordnung aller anderen Polygonabschnitte innerhalb eines vorgegebenen, vorzugsweise frei vorgegebenen, Winkel-Toleranzbereiches zum Verbindungssteg des Us, und durch
- die Berechnung des gewichteten Mittels der Winkel dieser Polygonabschnitte, und
- **daß** aus der Kenntnis des Winkels des Verbindungssteges des Us relativ zu den Hauptachsen des Pixel-Koordinatensystems der Rotationswinkel der Meßmarke berechnet wird und eine Rotationsnormierung des Abbildes der Meßmarke durchgeführt wird, und
- **daß** aus der Kenntnis des Winkels der Seitenstege des Us relativ zu den Hauptachsen des Pixel-Koordinatensystems der vermeintliche Scherwinkel der Meßmarke berechnet
wird und aus diesem vermeintlichen Scherwinkel mittels Kenntnis des Rotationswinkels der tatsächliche Scherwinkel berechnet wird und eine Schernormierung des Abbildes der Meßmarke durchgeführt wird,
und
- **daß** in dem rotations- und schernormierten Abbild der Meßmarke die Zusammenhangsgebiete der Kodier-Merkmale identifiziert werden, derart,
- **daß** sie sich in der bekannten Anzahl unter dem Verbindungssteg des Us befinden, und
- **daß** ihre Größenunterschiede innerhalb eines vorgegebenen, vorzugsweise frei vorgegebenen Toleranzbereiches liegen,
und
- **daß** bei Nichterfüllung dieser ldentifikations-Anforderungen eine Zurückweisung der Meßmarke erfolgt.

12. Verfähren zur Objektvermessung, bei dem
- das zu vermessende Objekt mit Meßmarken versehen wird, enthaltend Meß-Merkmale, Orientierungs-Merkmale und Kodier-Merkmale, und
- ein aus Pixeln aufgebautes, digitales Abbild des zu vermessenden, mit Meßmarken versehenen Objektes erzeugt wird mittels elektromagnetischer Wellen aus dem optischen oder einem angrenzenden Wellenlängenbereich, und
- potentielle, also vermeintliche oder tatsächliche, Meßmarken innerhalb des aus Pixeln aufgebauten, digitalen Abbildes des Objektes identifiziert werden, und die Pixel-Koordinaten der Zentren dieser potentiellen Meßmarken bestimmt werden,
**dadurch gekennzeichnet,**
- **daß** ein Verfahren zur Auswertung von Meßmarken verwendet wird nach einem oder mehreren der vorhergehenden Ansprüche
- **daß** die Auswertung der Meßmarken lokal innerhalb der Umgebung der Pixel-Koordinaten der Zentren dieser potentiellen Meßmarken durchgeführt wird, und
- **daß** die Pixel-Koordinaten der einzelnen erkannten Meßmarken in Bezug gesetzt werden zu einem 3D-Koordinatensystem des zu vermessenden Objektes, vorzugsweise in Bezug gesetzt werden mittels einer 3-D- Korrespondenzanalyse.

13. Meßmarke zur Verwendung in einem Verfahren zur Vermessung eines Objektes,
- die Meß-Merkmale, Orientierungs-Merkmale und Kodier-Merkmale aufweist, wobei
- die Orientierungs-Merkmale mindestens zwei zueinander senkrecht stehende Vorzugsrichtungen aufweisen, und wobei
- die Kodier-Merkmale in Form einer festen Anzahl bekannter Zeichen und/oder Symbole vorliegen,
- bei der die Meß-Merkmale, Orientierungs-Merkmale und Kodier-Merkmale in bekannter, fester Anzahl vorliegen,
- bei der die Meß-Merkmale, Orientierungs-Merkmale und Kodier-Merkmale relativ zueinander bekannte, feste geometrische Relationen besitzen
**dadurch gekennzeichnet,**
**dass** die Meß-Merkmale, Orientierungs-Merkmale und Kodier-Merkmale voneinander räumlich getrennt ausgeführt sind.

14. Meßmarke nach Anspruch 13,
**dadurch gekennzeichnet,**
- **daß** die Meß-Merkmale ausgebildet sind in Form einer Kreisfläche,
- **daß** die Orientierungs-Merkmale ausgebildet sind in einer U-förmigen Gestalt, bestehend aus zwei Seitenteilen und einem senkrecht zu diesen stehenden, vorzugsweise deutlich längeren Verbindungssteg,
- **daß** die Kodier-Merkmale ausgebildet sind in Form von
- drei nacheinanderstehenden Ziffern eines serifenlosen Fonts oder
- vier nacheinanderstehenden Zeichen aus der Menge der 10 Ziffern und der 26 Großbuchstaben eines serifenlosen Fonts,
und
- **daß** die Meß-Merkmale, Orientierungs-Merkmale und Kodier-Merkmale relativ zueinander in einer bekannten, festen geometrischen Relationen derart angeordnet sind,
- **daß** sich die Meß-Merkmale in Form einer Kreisfläche zentral innerhalb der U-förmigen Gestalt der Qrientierungsmerkmale befinden und
- **daß** die Kodier-Merkmale in Form einer festen Anzahl bekannter Zeichen unter dem Verbindungssteg des Us in einem bekannten, festen Abstand und in einem bekannten festen Größenverhältnis zu diesem nacheinander angeordnet sind.

## Claims

1. Method for evaluating images with measuring marks for measuring objects by means of image measurement,
- which include measuring features, orientation features and coding features,
- in the case of which method a digital image, consisting of pixels, of a putative or actual measuring mark is firstly produced by means of electromagnetic waves from the optical or an adjacent wavelength region,
- the pixel coordinates of the centre of the putative or actual measuring mark within its digital image being known, and
- in which method geometrical interference with regard to the recognizability of the measuring mark is compensated automatically with the aid of the orientation features,
**characterized**
- **in that** radiometric interference is compensated automatically by local binarization, and
- **in that** interference is compensated automatically by partial maskings by subjecting the raster elements of the continuity zone containing the coding features of the measuring mark to a classification, the highest probabilities supplied by the classification being compared with a prescribed minimum probability, and upon overshooting of this minimum probability the measuring mark being assigned to the object class corresponding to the most probable coding feature,
- and **in that** at least one quality measure is determined for detecting the measuring mark,
- and **in that** at least one check is carried out for recognizing an actual measuring mark or for rejecting a putative measuring mark with the aid of the at least one quality measure,
- and **in that** a characteristic feature vector which is fed to a classification is derived from the coding features of an actual measuring mark, and
- **in that** the measuring marks to be recognized have measuring features, orientation features and coding features which are spatially separated from one another.

2. Method according to Claim 1, **characterized**
- **in that** the digital image of the putative or actual measuring mark is firstly locally binarized, and
- **in that** a compensation of interference, a check of at least one rejection criterion and the derivation of the feature vector of an actual measuring mark are not performed until after this binarization.

3. Method according to Claim 2, **characterized in that** the local binarization is carried out in such a way
- that the maximum and the minimum colour or grey-scale values of the pixels are determined within a prescribed environment of the pixel coordinates of the centre of the putative or actual measuring mark, and
- that each pixel within this environment whose colour or grey-scale value lies closer to the maximum colour or grey-scale value of all the pixels within this environment than to the minimum colour or grey-scale value of all the pixels within this environment, or whose colour or grey-scale value lies exactly in the middle of the two values, is assigned to a group of pixels with high colour or grey-scale values, and
- that each pixel within this environment whose colour or grey-scale value lies closer to the minimum colour or grey-scale value of all the pixels within this environment than to the maximum colour or grey-scale value of all the pixels within this environment is assigned to a group of pixels with low colour or grey-scale values, and
- that the mean value of all the colour or grey-scale values of all the pixels from the group of pixels with high colour or grey-scale values is formed and weighted with the number of group elements, and
- that the mean value of all the colour or grey-scale values of all the pixels from the group of pixels with low colour or grey-scale values is formed and weighted with the number of group elements, and
- that a mean value which is used as threshold value for the binarization is formed from these two weighted mean values, and
- that each pixel within this environment whose colour or grey-scale value lies above the threshold value or is equal to the threshold value is given the binary value white, and
- that each pixel within this environment whose colour or grey-scale value lies below the threshold value is given the binary value black.

4. Method according to one of Claims 1, 2 or 3, **characterized**
- **in that** the measuring features, orientation features and coding features of the measuring mark are present in a known, fixed number, and
- **in that** the measuring features, orientation features and coding features have known, fixed geometrical relationships relative to one another, in particular have known, fixed spacings and relative positions to one another, and are at a known, fixed size ratio to one another, and
- **in that** continuity zones are identified within the digital image of the putative or actual measuring mark, and
- **in that** these continuity zones are used to decide whether the examined object is a putative or an actual measuring mark, and
- **in that** the decision with the aid of the continuity zones as to whether the examined object is a putative or actual measuring mark is taken by checking whether the individual found continuity zones have the prescribed minimum number and are in the known geometrical relationship to one another within a prescribed, preferably freely prescribed, tolerance range, and
- **in that** a rejection is performed in the event of an assignment of the continuity zones to an instance of interference, that is to say a putative measuring mark, and
- **in that**, in the event of an assignment of the continuity zones to an actual measuring mark, unique assignment is made for each individual continuity zone in such a way that it is known which individual continuity zone is the bearer of measuring features and/or orientation features and/or coding features.

5. Method according to Claim 4, **characterized in that** the identification of the continuity zones is performed in such a way
- that a continuity analysis of colour value objects of the digital image of the putative or actual measuring mark is performed in which all the pixels of the digital image whose colour value lies within a prescribed value range are assigned to a colour value object, or
- that a continuity analysis of grey-scale value objects of the digital image of the putative or actual measuring mark is performed in which all the pixels of the digital image whose grey-scale value lies within a prescribed value range are assigned to a grey-scale value object, or
- that a continuity analysis of black and/or white objects of the binarized digital image of the putative or actual measuring mark is performed.

6. Method according to Claim 4, **characterized in that** the identification of the continuity zones is performed in such a way
- that a continuity analysis of colour value objects of the digital image of the putative or actual measuring mark is performed in which all the pixels of the digital image are assigned to a colour value object by means of a classification of the colour value, preferably taking account of the colour values in a local neighbourhood, or
- that a continuity analysis of grey-scale value objects of the digital image of the putative or actual measuring mark is performed in which all the pixels of the digital image are assigned to a grey-scale value object by means of classification of the grey-scale value, preferably taking account of the grey-scale values in a local neighbourhood, or
- that a continuity analysis of black and/or white objects of the binarized digital image of the putative or actual measuring mark is performed.

7. Method according to one of Claims 3 to 6, **characterized**
- **in that** a simplified representation of the found continuity zones is produced by a contour representation by means of polygons, a polygon representation,
- and **in that** this original polygon representation is replaced by an approximated polygon representation, a polygon approximation,
- and **in that** this polygon approximation is carried out in such a way that it exclusively removes interpolation points of the original polygon of the contour representation, specifically until a prescribed, preferably freely prescribed, maximum tolerable surface deviation is exceeded.

8. Method according to one of Claims 4 to 7, **characterized**
- **in that** at least one continuity zone is identified as bearer of orientation features from the set of the found continuity zones of an actual measuring mark by means of the knowledge of the geometrical relationship of the various continuity zones to one another, and
- **in that** the actual orientation of the measuring mark is determined from these orientation features, and
- **in that** a normalization to a permanently prescribed, standard orientation is carried out, in particular a normalization of the digital image of the measuring mark or of the continuity zones, preferably a normalization of the representation of the continuity zones, and
- **in that** at least one continuity zone is identified as bearer of coding features from the set of the found continuity zones by means of the knowledge of the geometrical relationship of the various continuity zones to one another, and
- **in that** each continuity zone which has been identified as bearer of coding features is normalized in terms of size to an n x n raster, preferably to a 16 x 16 raster, and
- **in that** preferably each continuity zone which has been identified as bearer of coding features is contrast-enhanced by a scaling of the colour or grey-scale values of the individual raster elements of the continuity zone over a maximum colour value range or grey-scale value range, preferably over a grey-scale value range of 0 to 255, and
- **in that** each colour value or grey-scale value of a raster element of a continuity zone which has been identified as bearer of coding features is used as a component of an n x n dimensional, preferably 256 dimensional, feature vector of this continuity zone, and
- **in that** this feature vector is subjected to a principal axis transformation in such a way that the individual components of the transformed feature vector are present in ordered sequence corresponding to their importance for a classification, and
- **in that**, starting from the first and thus most important component, a limited number of components of the transformed feature vector, preferably the first 40 components, are fed to a single-object classification, preferably a single-character or single-symbol classification, preferably a single-stage quadratic polynomial classification, and
- **in that** this classification is used to calculate a probability vector whose number of components is equal to the number of the possible coding objects, preferably equal to the number of the possible coding characters or coding symbols, and whose components specify the probability of the identification of a specific object class, preferably the probability of the identification of a specific character class or symbol class, and
- **in that** the object class, preferably character class or symbol class, assumed to be the correct one is that identified with the highest probability if this probability exceeds a prescribed, preferably freely prescribed, minimum value, and
- **in that** a rejection of the feature is performed when no object class, preferably no character class or symbol class, has been identified with a probability above the prescribed minimum probability.

9. Method according to one of Claims 1 to 8, **characterized**
- **in that** the measuring marks to be evaluated have
- measuring features,
- orientation features in at least two preferred directions, preferably in mutually perpendicular preferred directions,
- coding features in the form of a fixed number of known characters and/or symbols, and
- **in that** the measuring features, orientation features and coding features are present in a known, fixed number, and
- **in that** the measuring features, orientation features and coding features have known, fixed geometrical relationships relative to one another,
- in particular have known, fixed spacings and relative positions to one another, and are at a known, fixed size ratio to one another.

10. Method according to one of Claims 1 to 9, **characterized**
- **in that** the measuring features are given the form of a circular surface,
- **in that** the orientation features are formed in a U shape comprising two side parts and a connecting web perpendicular to the latter and preferably substantially longer,
- **in that** the coding features are given the form of
- three aligned numerals of a non-serif font, or
- four aligned characters from the set of the 10 numerals and the 26 capital letters of a non-serif font, and
- **in that** the measuring features, orientation features and coding features are arranged relative to one another in known, fixed geometrical relationships in such a way
- that the measuring features are located in the form of a circular surface centrally inside the U shape of the orientation features, and
- that the coding features are arranged sequentially in the form of a fixed number of known characters under the connecting web of the U at a known, fixed spacing and at a known, fixed size ratio thereto.

11. Method according to Claim 10, **characterized**
- **in that** a search is made for continuity zones in the environment of the known pixel coordinates of the centre of a putative or actual measuring mark, and
- **in that** determined for each found continuity zone of a putative or actual measuring mark is a rectangle which is the smallest, axially parallel, surrounding rectangle of the respective continuity zone, and
- **in that** the smallest continuity zone within whose surrounding rectangle the known pixel coordinates of the centre of the putative or actual measuring mark are located is identified as the continuity zone which contains the measuring features, and
- **in that** the next larger continuity zone within whose surrounding rectangle the known pixel coordinates of the centre of the putative or actual measuring mark are located is identified as the continuity zone which contains the orientation features, and
- **in that** the surrounding rectangles are used to take the decision as to whether the examined object is a putative or actual measuring mark by checking whether the two rectangles exhibit a known geometrical relationship to one another within a prescribed, preferably freely prescribed, tolerance range, preferably at a known size ratio to one another, and/or one is surrounded by the other, and
- **in that** a rejection of the features is performed when this tolerance range is exceeded, and
- **in that**, in the event of the recognition of the examined object as the actual measuring mark, the determination of the orientation thereof is performed in such a way
- that a polygon approximation of the orientation features is produced, and
- that the angles of the orientation features relative to the principal axes of the pixel coordinate system are determined by
- plotting the individual polygon sections, weighted with their length, of the polygon approximation in an angle histogram, and by
- determining the two highest amplitudes of this angle histogram, and
- assigning the highest amplitude to the connecting web of the U and,
- assigning the second highest amplitude to the side webs of the U,
or
- that the angle of the orientation features is preferably determined relative to the principal axes of the pixel coordinate system by
- assigning the longest polygon section to the connecting web of the U, and by
- assigning all other polygon sections within a prescribed, preferably freely prescribed, angle tolerance range to the connecting web of the U, and by
- calculating the weighted mean of the angles of these polygon sections, and
- **in that** the rotational angle of the measuring mark is calculated from the knowledge of the angle of the connecting web of the U relative to the principal axes of the pixel coordinate system, a rotational normalization of the image of the measuring mark is carried out, and
- **in that** the putative shear angle of the measuring mark is calculated from the knowledge of the angle of the side webs of the U relative to the principal axes of the pixel coordinate system,
and the actual shear angle is calculated from this putative shear angle by means of knowledge of the rotational angle, and a normalization of the shear of the image of the measuring mark is carried out, and
- **in that** the continuity zones of the coding features are identified in the image, normalized for rotation and shear, of the measuring mark in such a way
- that they are located in the known number below the connecting web of the U, and
- that their size differences lie within a prescribed, preferably freely prescribed tolerance range, and
- **in that** a rejection of the measuring mark is performed in the event of nonfulfilment of these identification requirements.

12. Method for object measurement, in which
- the object to be measured is provided with measuring marks, including measuring features, orientation features and coding features, and
- a digital image, constructed from pixels, of the object to be measured and provided with measuring marks is produced by means of electromagnetic waves from the optical or an adjacent wavelength region, and
- potential, that is to say putative or actual, measuring marks are identified within the digital image of the object constructed from pixels, and the pixel coordinates of the centres of these potential measuring marks are determined,
**characterized**
- **in that** use is made of a method for evaluating measuring marks according to one or more of the preceding claims,
- **in that** the evaluation of the measuring marks is carried out locally within the environment of the pixel coordinates of the centre of these potential measuring marks, and
- **in that** the pixel coordinates of the individual recognized measuring marks are referred to a 3D coordinate system of the object to be measured, preferably referred with the aid of a 3D correspondence analysis.

13. Measuring mark for use in a method for measuring an object,
- which exhibits measuring features, orientation features and coding features,
- the orientation features having at least two mutually perpendicular preferred directions, and
- the coding features being present in the form of a fixed number of known characters and/or symbols,
- in which the measuring features, orientation features and coding features are present in a known, fixed number,
- in which the measuring features, orientation features and coding features have known, fixed geometrical relationships relative to one another,
**characterized in that** the measuring features, orientation features and coding features are designed to be spatially separate from one another.

14. Measuring mark according to Claim 13, **characterized**
- **in that** the measuring features are formed in the shape of a circular surface,
- **in that** the orientation features are formed in a U shape comprising two side parts and a connecting web perpendicular to the latter and preferably substantially longer,
- **in that** the coding features are given the form of
- three aligned numerals of a non-serif font, or
- four aligned characters from the set of the 10 numerals and the 26 capital letters of a non-serif font, and
- **in that** the measuring features, orientation features and coding features are arranged relative to one another in known, fixed geometrical relationships in such a way
- that the measuring features are located in the form of a circular surface centrally inside the U shape of the orientation features, and
- that the coding features are arranged sequentially in the form of a fixed number of known characters under the connecting web of the U at a known, fixed spacing and at a known, fixed size ratio thereto.

## Revendications

1. Procédé pour l'interprétation d'images avec des marques de repère en vue de la mesure d'objets au moyen d'une mesure d'image,
- qui comprennent des caractéristiques de dimensions, des caractéristiques d'orientation et des caractéristiques de codage,
- dans lequel on produit d'abord une représentation numérique, composée de pixels, d'une marque de repère présumée ou réelle au moyen d'ondes électromagnétiques du domaine des longueurs d'onde visibles ou d'un domaine proche,
- dans lequel les coordonnées des pixels du centre de la marque de repère présumée ou réelle à l'intérieur de la représentation numérique sont connues, et
- dans lequel on compense automatiquement des influences perturbatrices géométriques en ce qui concerne la perceptibilité de la marque de repère à l'aide des caractéristiques d'orientation,
**caractérisé en ce que**
- l'on compense automatiquement des influences perturbatrices radiométriques par une binarisation locale, et
- l'on compense automatiquement des influences perturbatrices par des masquages partiels, par le fait que les éléments de trame du domaine de cohérence contenant les caractéristiques de codage de la marque de repère sont soumis à une classification, les probabilités les plus élevées fournies par la classification étant comparées à une probabilité minimale prédéterminée et, en cas de franchissement de cette probabilité minimale, la marque de repère étant associée à la classe d'objets correspondant à la caractéristique de codage la plus probable, et
- l'on détermine au moins une mesure de qualité pour la reconnaissance de la marque de repère, et
- l'on effectue au moins un contrôle de reconnaissance d'une marque de repère réelle ou de rejet d'une marque de repère présumée à l'aide de la au moins une mesure de qualité, et
- l'on déduit des caractéristiques de codage d'une marque de repère réelle un vecteur caractéristique de caractéristiques, qui est introduit dans une classification, et
- les marques de repère à reconnaître présentent des caractéristiques de dimensions, des caractéristiques d'orientation et des caractéristiques de codage spatialement distinctes les unes des autres.

2. Procédé suivant la revendication 1, **caractérisé en ce que**
- l'on binarise d'abord localement la représentation numérique de la marque de repère présumée ou réelle, et
- l'on n'effectue une compensation d'influences perturbatrices, un contrôle d'au moins un critère de rejet et la déduction du vecteur de caractéristiques d'une marque de repère réelle qu'après cette binarisation.

3. Procédé suivant la revendication 2, **caractérisé en ce que** l'on opère la binarisation locale de telle manière que
- on détermine la valeur de couleur ou la valeur de gris maximale et minimale des pixels à l'intérieur d'un environnement prédéterminé des coordonnées des pixels du centre de la marque de repère présumée ou réelle, et que
- chaque pixel à l'intérieur de cet environnement, dont la valeur de couleur ou de gris est plus proche de la valeur maximale de couleur ou de gris de tous les pixels à l'intérieur de cet environnement que de la valeur minimale de couleur ou de gris de tous les pixels à l'intérieur de cet environnement, ou dont la valeur de couleur ou de gris se situe exactement au milieu de ces deux valeurs, est associé à un groupe de pixels avec de hautes valeurs de couleur ou dé gris, et que
- chaque pixel à l'intérieur de cet environnement, dont la valeur de couleur ou de gris est plus proche de la valeur minimale de couleur ou de gris de tous les pixels à l'intérieur de cet environnement que de la valeur maximale de couleur ou de gris de tous les pixels à l'intérieur de cet environnement, est associé à un groupe de pixels avec de basses valeurs de couleur ou de gris, et que
- on forme la valeur moyenne de toutes les valeurs de couleur ou de gris de tous les pixels du groupe de pixels avec de hautes valeurs de couleur ou de gris et on la pondère avec le nombre des éléments du groupe, et que
- on forme la valeur moyenne de toutes les valeurs de couleur ou de gris de tous les pixels du groupe de pixels avec de basses valeurs de couleur ou de gris et on la pondère avec le nombre des éléments du groupe, et que
- on forme à partir de ces deux valeurs moyennes pondérées une valeur moyenne, qui est utilisée comme valeur de seuil de la binarisation, et que
- chaque pixel à l'intérieur de cet environnement, dont la valeur de couleur ou de gris est située au-dessus de la valeur de seuil ou est égale à la valeur de seuil, reçoit la valeur binaire Blanc, et que
- chaque pixel à l'intérieur de cet environnement, dont la valeur de couleur ou de gris est située en dessous de la valeur de seuil, reçoit la valeur binaire Noir.

4. Procédé suivant l'une quelconque des revendications 1, 2 ou 3, **caractérisé en ce que**
- les caractéristiques de dimensions, les caractéristiques d'orientation et les caractéristiques de codage de la marque de repère sont présentes en nombre fixe connu, et que
- les caractéristiques de dimensions, les caractéristiques d'orientation et les caractéristiques de codage possèdent les unes par rapport aux autres des relations géométriques fixes connues, en particulier des distances fixes connues et des positions relatives fixes connues les unes par rapport aux autres, et se trouvent dans un rapport de grandeur fixe connu les unes par rapport aux autres, et que
- on identifie des domaines de cohérence à l'intérieur de la représentation numérique de la marque de repère présumée ou réelle, et que
- on décide, à l'aide de ces domaines de cohérence, s'il s'agit pour l'objet examiné d'une marque de repère présumée ou d'une marque de repère réelle, et que
- on prend la décision à l'aide des domaines de cohérence, de savoir s'il s'agit pour l'objet examiné d'une marque de repère présumée ou d'une marque de repère réelle, en contrôlant si les domaines de cohérence individuels trouvés présentent le nombre minimal prédéterminé et se trouvent dans la relation géométrique connue l'un par rapport à l'autre à l'intérieur d'un domaine de tolérances prédéterminé, de préférence prédéterminé librement, et que
- dans le cas où les domaines de cohérence sont associés à une perturbation, donc à une marque de repère présumée, il se produit un rejet, et que
- dans le cas où les domaines de cohérence sont associés à une marque de repère réelle, on opère une liaison claire pour chaque domaine de cohérence individuel, de telle manière que l'on sache quel domaine de cohérence individuel est porteur de caractéristiques de dimensions et/ou de caractéristiques d'orientation et/ou de caractéristiques de codage.

5. Procédé suivant la revendication 4, **caractérisé en ce que** l'identification des domaines de cohérence est effectuée de telle manière que
- on effectue une analyse de cohérence d'objets de valeurs de couleur de la représentation numérique de la marque de repère présumée ou réelle, dans laquelle on associe à un objet de valeur de couleur tous les pixels de la représentation numérique, dont la valeur de couleur est située à l'intérieur d'un domaine de valeurs prédéterminé, ou que
- on effectue une analyse de cohérence d'objets de valeurs de gris de la représentation numérique de la marque de repère présumée ou réelle, dans laquelle on associe à un objet de valeur de gris tous les pixels de la représentation numérique, dont la valeur de gris est située à l'intérieur d'un domaine de valeurs prédéterminé, ou que
- on effectue une analyse de cohérence d'objets Noirs et/ou Blancs de la représentation numérique binarisée de la marque de repère présumée ou réelle.

6. Procédé suivant la revendication 4, **caractérisé en ce que** l'identification des domaines de cohérence est effectuée de telle manière que
- on effectue une analyse de cohérence d'objets de valeurs de couleur de la représentation numérique de la marque de repère présumée ou réelle, dans laquelle on associe à un objet de valeur de couleur tous les pixels de la représentation numérique au moyen d'une classification de la valeur de couleur, de préférence en tenant compte de la valeur de couleur dans un voisinage local, ou que
- on effectue une analyse de cohérence d'objets de valeurs de gris de la représentation numérique de la marque de repère présumée ou réelle, dans laquelle on associe à un objet de valeur de gris tous les pixels de la représentation numérique au moyen d'une classification de la valeur de gris, de préférence en tenant compte de la valeur de gris dans un voisinage local, ou que
- on effectue une analyse de cohérence d'objets Noirs et/ou Blancs de la représentation numérique binarisée de la marque de repère présumée ou réelle.

7. Procédé suivant l'une quelconque des revendications 3 à 6, **caractérisé en ce que**
- on produit une représentation simplifiée des domaines de cohérence trouvés, par une représentation des contours au moyen de polygones, une représentation polygonale, et que
- on remplace cette représentation polygonale originelle par une représentation polygonale approchée, une approximation polygonale, et que
- on effectue cette approximation polygonale de telle manière qu'elle écarte exclusivement des sommets du polygone originel de la représentation des contours, notamment jusqu'à ce qu'un écart de surface maximal tolérable prédéterminé, de préférence librement prédéterminé, soit dépassé.

8. Procédé suivant l'une quelconque des revendications 4 à 7, **caractérisé en ce que**
- on identifie au moins un domaine de cohérence comme support de caractéristiques d'orientation à partir de la quantité des domaines de cohérence trouvés d'une marque de repère réelle, au moyen de la connaissance de la relation géométrique des divers domaines de cohérence les uns par rapport aux autres, et que
- on détermine l'orientation réelle de la marque de repère à partir de ces caractéristiques d'orientation, et que
- on opère une normalisation sur une orientation unitaire fixement prédéterminée,
en particulier une normalisation de la représentation numérique de la marque de repère ou des domaines de cohérence, de préférence une normalisation de la représentation des domaines de cohérence, et que
- on identifie au moins un domaine de cohérence comme support de caractéristiques de codage à partir de la quantité des domaines de cohérence trouvés, au moyen de la connaissance de la relation géométrique des divers domaines de cohérence les uns par rapport aux autres, et que
- chaque domaine de cohérence, qui a été identifié comme support de caractéristiques de codage, est normalisé en grandeur à une trame n x n, de préférence une trame 16 x 16, et que
- de préférence chaque domaine de cohérence, qui a été identifié comme support de caractéristiques de codage, est renforcé en contraste par une gradation des valeurs de couleur ou de gris des éléments de trame individuels du domaine de cohérence sur un domaine maximal de valeurs de couleur ou un domaine maximal de valeurs de gris, de préférence sur un domaine de valeurs de gris de 0 à 255, et que
- chaque valeur de couleur ou de gris d'un élément de trame d'un domaine de cohérence, qui a été identifié comme support de caractéristiques de codage, est utilisé comme composante d'un vecteur de caractéristiques à n x n dimensions, de préférence à 256 dimensions, de ce domaine de cohérence, et que
- ce vecteur de caractéristiques est soumis à une transformation des axes principaux, de telle manière que les composantes individuelles du vecteur de caractéristiques transformé se trouvent en une série ordonnée en fonction de leur importance pour une classification, et que
- un nombre limité de composantes du vecteur de caractéristiques transformé, compté à partir de la première et donc plus importante composante, de préférence les 40 premières composantes, est introduit dans une classification d'objets individuels, de préférence une classification de signes individuels ou de symboles individuels, de préférence dans une classification de polynômes carrée à un étage, et que
- au moyen de cette classification, on calcule un vecteur de probabilité, dont le nombre de composantes est égal au nombre des objets de codage possibles, de préférence égal au nombre des signes de codage ou des symboles de codage possibles, et dont les composantes indiquent la probabilité de l'identification d'une classe d'objets déterminée, de préférence la probabilité de l'identification d'une classe de signes ou de symboles déterminée, et que
- la classe d'objets, de préférence la classe de signes ou de symboles, dont l'identification a été effectuée avec la plus grande probabilité, est supposée correcte, dans la mesure où cette probabilité dépasse une valeur minimale prédéterminée, de préférence librement prédéterminée, et que
- on opère un rejet de la marque de repère, lorsqu'aucune classe d'objets, de préférence aucune classe de signes ou de symboles, n'a été identifiée avec une probabilité dépassant la probabilité minimale prédéterminée.

9. Procédé suivant l'une quelconque des revendications 1 à 8, **caractérisé en ce que**
- les marques de repère à interpréter présentent
- des caractéristiques de dimensions,
- des caractéristiques d'orientation dans au moins deux directions préférées, de préférence dans des directions préférées orientées perpendiculairement l'une à l'autre,
- des caractéristiques de codage sous la forme d'un nombre fixe de signes et/ou de symboles connus,
et que
- les caractéristiques de dimensions, les caractéristiques d'orientation et les caractéristiques de codage sont présentes en un nombre fixe connu,
et que
- les caractéristiques de dimensions, les caractéristiques d'orientation et les caractéristiques de codage présentent des relations géométriques fixes connues les unes par rapport aux autres,
en particulier des distances fixes connues et des positions relatives fixes connues les unes par rapport aux autres, et se trouvent dans un rapport de grandeur fixe connu les unes par rapport aux autres.

10. Procédé suivant l'une quelconque des revendications 1 à 9, **caractérisé en ce que**
- les caractéristiques de dimensions se présentent sous la forme d'une surface circulaire, et que
- les caractéristiques d'orientation se présentent sous la forme d'une structure en forme de U, se composant de deux parties latérales et d'une âme de jonction, de préférence nettement plus longue, placée perpendiculairement à celles-ci, et que
- les caractéristiques de codage se présentent sous la forme de
- trois chiffres successifs d'une police de caractères linéale ou
- quatre signes successifs tirés des 10 chiffres et des 26 caractères majuscules d'une police de caractères linéale, et que
- les caractéristiques de dimensions, les caractéristiques d'orientation et les caractéristiques de codage sont disposées les unes par rapport aux autres dans une relation géométrique fixe connue, de telle manière que
- les caractéristiques de dimensions se trouvent sous la forme d'une surface circulaire au centre à l'intérieur de la structure en forme de U des caractéristiques d'orientation, et que
- les caractéristiques de codage sont disposées l'une derrière l'autre sous la forme d'un nombre fixe de signes connus sous l'âme de jonction du U à une distance fixe connue et dans un rapport de grandeur fixe connu par rapport à celui-ci.

11. Procédé suivant la revendication 10, **caractérisé en ce que**
- on recherche des domaines de cohérence dans l'environnement des coordonnées de pixels connues du centre d'une marque de repère présumée ou réelle, et que
- on détermine pour chaque domaine de cohérence trouvé d'une marque de repère présumée ou réelle un rectangle, qui est le plus petit rectangle parallèle aux axes et entourant le domaine de cohérence respectif, et que
- on identifie le plus petit domaine de cohérence, à l'intérieur du rectangle circonscrit duquel se trouvent les coordonnées de pixels connues du centre de la marque de repère présumée ou réelle, comme le domaine de cohérence qui contient les caractéristiques de dimensions, et que
- on identifie le domaine de cohérence suivant en grandeur, à l'intérieur du rectangle circonscrit duquel se trouvent les coordonnées de pixels connues du centre de la marque de repère présumée ou réelle, comme le domaine de cohérence qui contient les caractéristiques d'orientation, et que
- à l'aide des rectangles circonscrits, on prend la décision de savoir s'il s'agit pour l'objet examiné d'une marque de repère présumée ou réelle, par le fait que l'on contrôle si les deux rectangles se trouvent dans une relation géométrique connue l'un par rapport à l'autre à l'intérieur d'un domaine de tolérances prédéterminé, de préférence librement prédéterminé, de préférence s'ils se trouvent dans un rapport de grandeur connu l'un par rapport à l'autre et/ou si l'un est entouré par l'autre, et que
- on opère un rejet de la marque de repère si ce domaine de tolérances est dépassé, et que
- dans le cas de la reconnaissance de l'objet examiné comme une marque de repère réelle, on effectue la détermination de son orientation de telle manière que
- on produit une approximation polygonale des caractéristiques d'orientation, et que
- on détermine les angles des caractéristiques d'orientation par rapport aux axes principaux du système de coordonnées de pixels, par
- le report des portions de polygone individuelles pondérées avec leur longueur de l'approximation polygonale dans un histogramme d'angles, et par
- la détermination des deux amplitudes les plus grandes de cet histogramme d'angles, et par
- l'attribution de la plus grande amplitude à l'âme de jonction du U, et par
- l'attribution de la seconde plus grande amplitude aux branches latérales du U,
ou que
- on détermine les angles des caractéristiques d'orientation par rapport aux axes principaux du système de coordonnées de pixels de préférence par
- l'attribution de la plus longue portion de polygone à l'âme de jonction du U, et par
- l'attribution de toutes les autres portions de polygone à l'âme de jonction du U à l'intérieur d'un domaine de tolérances angulaires prédéterminé, de préférence librement prédéterminé, et par
- le calcul de la moyenne pondérée des angles de ces portions de polygone,
et que
- on calcule l'angle de rotation de la marque de repère à partir de la connaissance de l'angle de l'âme de jonction du U par rapport aux axes principaux du système de coordonnées de pixels, et on effectue une normalisation de la rotation de la représentation de la marque de repère, et que
- on calcule l'angle de cisaillement présumé de la marque de repère à partir de la connaissance de l'angle des branches latérales du U par rapport aux axes principaux du système de coordonnées de pixels et on calcule l'angle de cisaillement réel à partir de cet angle de cisaillement présumé au moyen de la connaissance de l'angle de rotation et on effectue une normalisation du cisaillement de la représentation de la marque de repère, et que
- on identifie les domaines de cohérence des caractéristiques de codage dans la représentation normalisée en rotation et en cisaillement de la marque de repère, de telle manière que
- ils se trouvent dans le nombre connu en dessous de l'âme de jonction du U, et que
- leurs différences de grandeur se situent à l'intérieur d'un domaine de tolérances prédéterminé, de préférence librement prédéterminé, et que
- on opère un rejet de la marque de repère en cas de non respect de ces conditions d'identification.

12. Procédé pour la mesure d'un objet, dans lequel
- l'objet à mesurer est pourvu de marques de repère, contenant des caractéristiques de dimensions, des caractéristiques d'orientation et des caractéristiques de codage, et
- on produit une représentation numérique, composée de pixels, de l'objet à mesurer pourvu de marques de repère, au moyen d'ondes électromagnétiques du domaine des longueurs d'onde visibles ou d'un domaine proche, et
- on identifie des marques de repère potentielles, donc présumées ou réelles, à l'intérieur de la représentation numérique, composée de pixels, de l'objet, et on détermine les coordonnées de pixels des centres de ces marques de repère potentielles,
**caractérisé en ce que**
- on utilise un procédé pour l'interprétation de marques de repère suivant une ou plusieurs des revendications précédentes, et que
- on effectue l'interprétation des marques de repère localement à l'intérieur de l'environnement des coordonnées de pixels des centres de ces marques de repère potentielles, et que
- les coordonnées de pixels des marques de repère individuelles reconnues sont mises en relation avec un système de coordonnées en 3 D de l'objet à mesurer, de préférence mises en relation au moyen d'une analyse de correspondance en 3 D.

13. Marque de repère à utiliser dans un procédé pour mesurer un objet,
- qui présente des caractéristiques de dimensions, des caractéristiques d'orientation et des caractéristiques de codage, dans laquelle
- les caractéristiques d'orientation présentent au moins deux directions préférées orientées perpendiculairement l'une à l'autre, et dans laquelle
- les caractéristiques de codage se présentent sous la forme d'un nombre fixe de signes et/ou de symboles connus,
- dans laquelle les caractéristiques de dimensions, les caractéristiques d'orientation et les caractéristiques de codage sont présentes en un nombre fixe connu,
- dans laquelle les caractéristiques de dimensions, les caractéristiques d'orientation et les caractéristiques de codage présentent des relations géométriques fixes connues les unes par rapport aux autres,
**caractérisée en ce que**
- les caractéristiques de dimensions, les caractéristiques d'orientation et les caractéristiques de codage sont spatialement distinctes les unes des autres.

14. Marque de repère suivant la revendication 13,
**caractérisée en ce que**
- les caractéristiques de dimensions se présentent sous la forme d'une surface circulaire, et que
- les caractéristiques d'orientation se présentent sous la forme d'une structure en forme de U, se composant de deux parties latérales et d'une âme de jonction, de préférence nettement plus longue, placée perpendiculairement à celles-ci, et que
- les caractéristiques de codage se présentent sous la forme de
- trois chiffres successifs d'une police de caractères linéale ou
- quatre signes successifs tirés des 10 chiffres et des 26 caractères majuscules d'une police de caractères linéale, et que
- les caractéristiques de dimensions, les caractéristiques d'orientation et les caractéristiques de codage sont disposées les unes par rapport aux autres dans une relation géométrique fixe connue, de telle manière que
- les caractéristiques de dimensions se trouvent sous la forme d'une surface circulaire au centre à l'intérieur de la structure en forme de U des caractéristiques d'orientation, et que
- les caractéristiques de codage sont disposées l'une derrière l'autre sous la forme d'un nombre fixe de signes connus sous l'âme de jonction du U à une distance fixe connue et dans un rapport de grandeur fixe connu par rapport à celui-ci.
